# EUROPEAN PATENT APPLICATION

(11) **EP 4 557 550 A1**
(43) Date of publication of application: **21.05.2025**
(21) Application number: 24214200.8
(22) Date of filing: 20.11.2024
(51) Int. Cl.: H02J 1/08, H02J 3/38, H02J 7/00, H02J 7/34, H02M 1/00, H02M 5/458

(54) **APPARATUS, SYSTEM AND METHOD FOR POWER CONVERSION**

(30) Priority: 20.11.2023 US 202363600922 P; 22.04.2024 US 202463637069 P
(71) Applicant: Solaredge Technologies Ltd., Herzeliya 4673335 (IL)
(72) Inventor: YOSCOVICH, Ilan, 4673335 Herzeliya (IL); LEVY, Yehuda, 4673335 Herzeliya (IL); LOEWENSTERN, Yakir, 4673335 Herzeliya (IL)
(74) Representative: V.O.

(57) **Abstract**

Systems, apparatuses, and methods are described for power conversion to, from, and/or between different power buses. The power conversion may be from a power source to a power bus, from a power bus to a power source, between a first power bus and a second power bus, etc. The power conversion may be from a DC power source and/or an AC power source to a DC bus and/or an AC bus. The power conversion may be from a DC bus and/or an AC bus to a DC power source that may be chargeable and/or configured to receive power. The power conversion may be from a DC bus to an AC bus, from an AC bus to a DC bus, from a first DC bus to a second DC bus, from a first AC bus to a second AC bus, etc. One or more of the buses may be for backup loads.

## Description

### CROSS-REFERENCE TO RELATED APPLICATIONS

This application claims the benefit of U.S. Provisional Application No. 63/600,922, filed on November 20, 2023, and U.S. Provisional Application No. 63/637,069, filed on April 22, 2024. The above referenced applications are hereby incorporated by reference in their entirety.

### BACKGROUND

In an electric power system, a power bus may be used to connect and/or distribute power between different devices of the power system. The bus may include busbars. The busbars, together with electrical wires, may be used to connect the different devices of the power system to each other. The busbars and/or electrical wires may be made from electrically conductive material, such as metal. The busbars and/or electrical wires may be covered with insulating material. The different devices of the power system may include power supplies that provide power to the bus and/or loads that receive power from the bus. The bus may be a direct current (DC) bus or, alternatively, an alternating current (AC) bus.

### SUMMARY

The following summary presents a simplified summary of certain features. The summary is not an extensive overview and is not intended to identify key or critical elements.

Systems, apparatuses, and methods are described for power conversion to, from, and/or between different power buses. The power conversion may be from a power source to a power bus. The power conversion may be from a power bus to a power source. The power conversion may be between a first power bus and a second power bus. The power conversion, for example, may be from a DC power source to a DC bus or an AC bus. The power conversion may be from an AC power source to a DC bus or an AC bus. The power conversion may be from a DC bus or an AC bus to a DC power source that may be chargeable and/or may be configured to receive power. The power conversion may be from a DC bus to an AC bus, from an AC bus to a DC bus, from a first DC bus to a second DC bus, from a first AC bus to a second AC bus, etc. One or more of the buses may be designated as a line for backup loads.

The power conversion may be done using one or more power conversion devices that may include power converter circuitry and/or switching circuitry. The power converter circuitry may include DC to DC power conversion circuitry, AC to AC power conversion circuitry, DC to AC power conversion circuitry, AC to DC power conversion circuitry, etc. The switching circuitry may be configured to connect between the power converter circuitry and/or a plurality of power bus lines. The switching circuitry may be configured to connect between the power converter circuitry and/or the plurality of power bus lines using a switch. The switching circuitry may include a plurality of switches each with terminals that may connect a terminal of the power conversion circuitry to a terminal of a power bus line. Switching circuitry, for example, may have one or more switches that may connect between the power converter circuitry and/or one or more DC bus lines, one or more switches that may connect the power converter circuitry to one or more AC bus lines, etc. The switching circuitry, for example, may connect the power converter circuitry to a plurality of DC bus lines using a switch. The switching circuitry, for example, may connect the power converter circuitry to a plurality of AC bus lines using a switch. The switching circuitry, for example, may connect the power converter circuitry to one or more DC bus lines and/or one or more AC bus lines using a switch. The converter circuitry, for example, may be connected to a power source. The power source may be a rechargeable power source (e.g., a battery). The power source may be internal and/or external to a housing for the converter circuitry and/or the switching circuitry.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIGS. 1A 1H show examples of power conversion devices.
FIG. 2 shows an example power flow diagram of a power conversion device.
FIG. 3 shows an example of converter circuitry.
FIGS. 4A - 4D show examples of a power system.
FIGS. 5A and 5B show examples of power control circuitry.
FIG. 6A - 6F show examples of power control circuitry.
FIGS. 7A - 7C show examples of converter circuitry.
FIG. 8A - 8F show examples of converter circuitry.
FIG. 9 shows a flowchart of an example method for power conversion.
FIG. 10A shows an example power conversion device.
FIG. 10B and 10C show examples of operations of an apparatus.
FIG. 10D shows example graphs.
FIG. 11 shows an example power source circuitry.
FIG. 12 shows an example power conversion device.
FIG. 13A shows an example power conversion device.
FIG. 13B shows an example power source circuitry.
FIG. 13C shows an example feedback circuitry.
FIG. 14 shows an example power conversion device.
FIG. 15 shows an example power conversion device.
FIG. 16 shows an example power conversion device.
FIG. 17 shows an example power conversion device.
FIG. 18 shows an example power conversion device.
FIG. 19A shows an example power conversion device.
FIG. 19B shows an example power conversion device.
FIG. 20A shows an example power device.
FIG. 20B shows an example power device.
FIG. 21A shows an example switching circuitry arrangement.
FIG. 21B shows an example switching circuitry arrangement.
FIG. 22 shows example graphs.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

Systems, apparatuses, and methods are described for power conversion to, from, and/or between different power buses. The power conversion may be from a power source to a power bus. The power conversion may be from a power bus to a power source. The power conversion may be between a first power bus and a second power bus. The power conversion, for example, may be from a DC power source to a DC bus or an AC bus. The power conversion may be from an AC power source to a DC bus or an AC bus. The power conversion may be from a DC bus or an AC bus to a DC power source that may be chargeable and/or may be configured to receive power. The power conversion may be from a DC bus to an AC bus, from an AC bus to a DC bus, from a first DC bus to a second DC bus, from a first AC bus to a second AC bus, etc. One or more of the buses may be designated as a line for backup loads.

The power conversion may be done using one or more power conversion devices that may include power converter circuitry and/or switching circuitry. The power converter circuitry may include DC to DC power conversion circuitry, AC to AC power conversion circuitry, DC to AC power conversion circuitry, AC to DC power conversion circuitry, etc. The switching circuitry may be configured to connect between the power converter circuitry and/or a plurality of power bus lines. The switching circuitry may be configured to connect between the power converter circuitry and/or the plurality of power bus lines using a switch. The switching circuitry may include a plurality of switches each with terminals that connect between a terminal of the power conversion circuitry and a terminal of a power bus line. Switching circuitry, for example, may have one or more switches that connect between the power converter circuitry and one or more DC bus lines, one or more switches that may connect between the power converter circuitry and/or one or more AC bus lines, etc. The switching circuitry, for example, may connect the power converter circuitry to a plurality of DC bus lines using a switch. the switching circuitry, for example, may, using a switch, connect the power converter circuitry to a plurality of AC bus lines. The switching circuitry, for example, may, using a switch, connect the power converter circuitry to one or more DC bus lines and/or one or more AC bus lines. The converter circuitry may be connected to a power source. The power source may be a rechargeable power source (e.g., a battery). The power source may be internal and/or external to a housing for the converter circuitry and/or the switching circuitry.

Disclosed subject matter are not bound by the systems and/or apparatuses described with reference to the figures. Equivalent and/or modified functionality may be consolidated or divided in another manner and may be implemented in any appropriate combination. Elements which are shown as separate units, for example, may have their functionalities and/or components combined into a single unit.

Similar references in the various figures may refer to similar elements throughout the application. Similar reference numbers may also connote similarities between elements. Throughout the application certain general references may be used to refer to any of the specific related elements. For example, converter circuitry 102 may refer to converter circuitry 102A and/or converter circuitry 102B, switching circuitry 104 may refer to switching circuitry 104A and/or switching circuitry 104B, etc.

All numerical values given in the examples of the description are provided for purposes of example only and do not exclude the use of other numerical values for the same feature.

The terms "substantially" and "about" are used herein to indicate variations that are equivalent for an intended purpose or function (e.g., within a permissible variation range). Certain values or ranges of values are presented herein with numerical values being preceded by the terms "substantially" and "about." The terms "substantially" and "about" are used herein to provide literal support for the exact number that it precedes, as well as a number that is near to or approximately the number that the term precedes. In determining whether a number is near to or approximately a specifically recited number, the near or approximating un-recited number may be a number, which, in the context in which it is presented, provides a substantial equivalent of the specifically recited number.

Control devices, including "controller," "control circuitry," "computer," "processor," "processing circuitry," and variations of these terms as used herein, include any analog or digital electronic hardware circuit capable of performing one or more logical or arithmetic functions. The functions may be based on a received signal (e.g., from a sensor that measures a physical parameter as in the various examples described herein). Performance of the functions may cause an output of a signal (e.g., to control another device such as a switch or to provide an indication as in the various examples described herein). Such control devices include, by way of non-limiting examples, a digital signal processor (DSP), microprocessor, microcontroller, field programmable gate array (FPGA), application-specific integrated circuit (ASIC), embedded controller, analog comparator, analog-to-digital controller, digital-to-analog controller, etc., and/or combinations thereof. Such control devices may include and/or be connected to a memory that stores instructions that may be read, interpreted, and/or executed by the devices, and based on the executed instructions, perform any one of functions or control as described herein. The terms "memory" or "data storage device" used herein include any volatile or non-volatile computer memory suitable to the presently disclosed subject matter (e.g., random-access memory [RAM], static random-access memory [SRAM], read-only memory [ROM], erasable programmable read-only memory [EPROM], electrically erasable programmable read-only memory [EEPROM], dynamic random-access memory [DRAM], etc.). The above may include any of the control circuitry disclosed herein. More specifically, by way of non-limiting example, the above may include the control circuitry 310 disclosed in the present application. Control devices may be included or connected to interface hardware, that converts signals from other devices (e.g., sensors) to signals compatible with the control device (e.g., a comparator or analog to digital [A/D] converter that converts an analog signal to a digital signal), or that converts signals from the control device to signals compatible with another device (e.g., an amplifier for driving a control input of a switch). The control circuitry may be configured to output control signals to control an operational state (e.g., ON, OFF, opened, closed, etc.) of one or more switches.

The terms "switching circuitry" and "switch" used herein may refer to any appropriate switching element. Examples of a switch are, but are not limited to: a transistor, a field effect transistor (FET), a metal oxide semiconductor field effect transistor (MOSFET), a bipolar junction transistor (BJT), an insulated-gate bipolar transistor (IGBT), a Silicon Carbide (SiC) switch, a Gallium Nitride (GaN) switch, a thyristor, a semiconductor controlled rectifier (SCR), a solid state relay (SSR), electromechanical relays, AC relays, throw switches, etc. The switch may be single throw, double throw, etc. A switch may be controlled into different states (e.g., ON, OFF) via a control input (e.g., gate, base, coil terminals) connected to a signal generated from a control device (e.g., based on performing one or more functions).

In some examples, the figures may show a single line to represent an electrical connection between two elements. The single line connection is used for the sake of simplicity. The single line connection may actually be two or more lines (e.g., electrical connections using electrical connectors) that connect between the different elements. In some examples connection between elements may be a magnetic connection (for example, the linkage between two different elements may be galvanic).

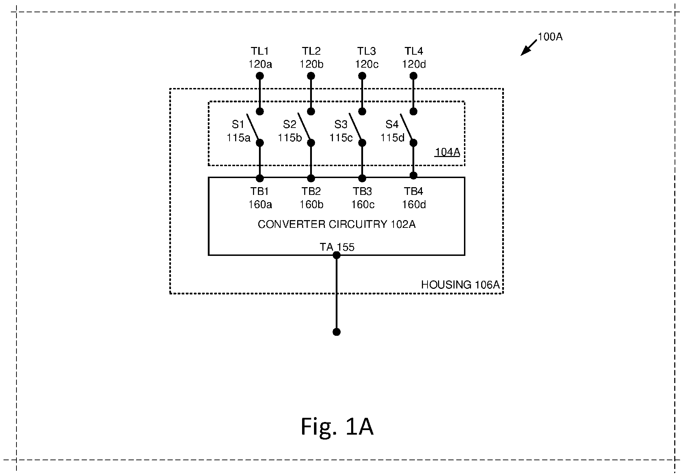

Figs. 1A - 1H show examples of power conversion devices. Fig. 1A shows an example of a power conversion device 100A. A power conversion device 100A may comprise converter circuitry 102, switching circuitry 104, and/or housing 106. The converter circuitry 102A may include a plurality of power conversion circuitries. The plurality of power conversion circuitries may include, for example, DC to DC conversion circuitry, DC to AC conversion circuitry, AC to DC conversion circuitry, AC to AC conversion circuitry, etc.

Power conversion devices 100 shown and described herein may include circuitry described in U.S. Patent Application Number US 63/637,069, incorporated herein by reference. For example, converter circuitry 102 may include cycloconverter circuitry configured to convert AC to AC.

Converter circuitry 102A may include one or more terminals TA 155 that may be configured to connect to a power source. A power source may be a bidirectional rechargeable power source that may either provide power as a power supply and/or receive power as a load. The power source may be a battery. The power source may be and/or may include power generation circuitry such as a generator, photovoltaic (PV) power generator, wind power generator, fuel cell power generator, etc. Each power source may include a plurality of power sources (for e.g., a plurality of batteries, a plurality of PV generators, a battery and a PV generator, etc.). The battery may be part of an electric vehicle (EV). As mentioned above, a single line is shown for connections in Fig. 1A for the sake of simplicity. The single lines, for example, may represent two or more lines that electrically connect between the different elements. Similarly, each of those two or more lines may each also include a respective switch (e.g., switch S1 may actually represent two or more switches connected in parallel in parallel lines between the power conversion device 100 and a power bus), for example, if a line shows a single switch, and if the connection actually represents two or more lines.

Converter circuitry 102A may include a plurality of terminals TB1 160a, TB2 160b, TB3 160c, and/or TB4 160d configured to connect to switching circuitry 104A. Switching circuitry 104A may be configured to connect between converter circuitry 102A and a plurality of power buses. Switching circuitry 102A may include a plurality of switches 115a - 115d (e.g., S1, S2, S3, and/or S4). Each of the plurality of switches 115a - 115d (e.g., S1, S2, S3, and/or S4) may include a first terminal configured to connect to a respective terminal TB of switching circuitry 104A. Each of the plurality of switches 115a - 115d (e.g., S1, S2, S3, and/or S4) may include a second terminal configured to connect to a respective terminal TL 120a - 120d (e.g., TL1, TL2, TL3, and/or TL4). Each terminal TL 120a - 120d (e.g., TL1, TL2, TL3, and/or TL4) may be configured to connect to a respective power bus line. The power bus line, for example, may be a first DC bus line, second DC bus line, first AC bus line, second AC bus line, etc. Switching circuitry 104 is shown with four lines and four switches, but in some configurations, there may be more or there may be less lines and more or less corresponding switches.

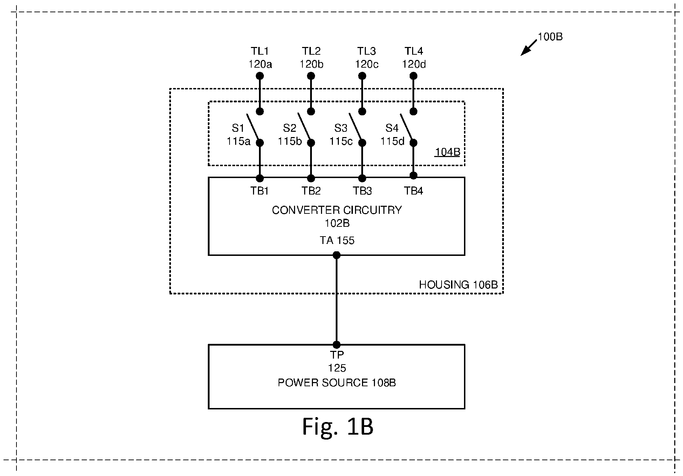

Fig. 1B shows an example of a power conversion device 100B. A power conversion device 100B may include a power source 108B. The power source 108B may include one or more terminals TP 125 configured to connect to a respective terminal TA 155 of converter circuitry 102B. Power source 108B may be external to housing 106B.

Power source 108B may be a bidirectional rechargeable power source that may either provide power as a power supply or receive power as a load. Power source 108B may be a battery. Power source 108B may be or may include power generation circuitry (e.g., a generator, photovoltaic (PV) power generator, wind power generator, fuel cell power generator, etc.). Each power source 108B may include a plurality of power sources 108B (e.g., a plurality of batteries, a plurality of PV generators, a battery and a PV generator, etc.). The battery may be part of an electric vehicle (EV). The plurality of power sources 108B may be connected in series, in parallel, or a combination of the two. In some examples, one or more additional switches may be connected between power source 108B and converter circuitry 102B. The one or more additional switches may be configured to control electrical connection between the one or more power sources 108B and converter circuitry 102B. For example, if the one or more or more additional switches are closed, then one or more of the power sources 108B, connected to the one or more additional switches, may be connected to the converter circuitry 102B. If the one or more or more additional switches are open, then one or more of the power sources 108B, connected to the one or more additional switches, may be disconnected from the converter circuitry 102B. As mentioned above, the single line connections may represent two or more lines for electrical connection.

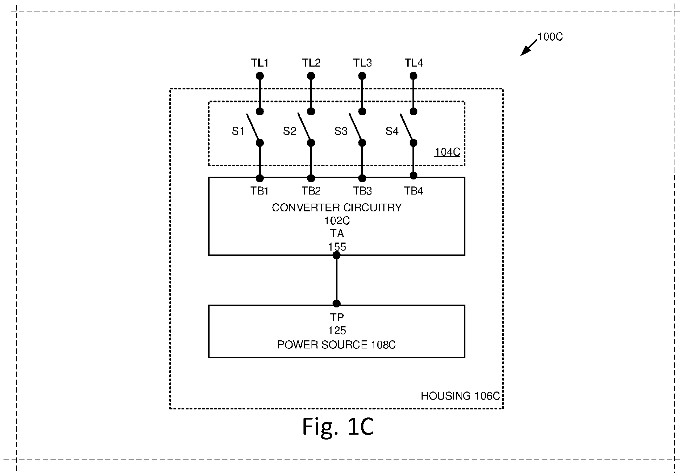

Fig. 1C shows an example of a power conversion device 100C. A power conversion device 100C may include a power source 108C. Power source 108C may include one or more terminals TP 125 configured to connect to a respective terminal TA 155 of converter circuitry 102C. Power source 108C may be internal to housing 106C. Power source 108C may be similar to power source 108B.

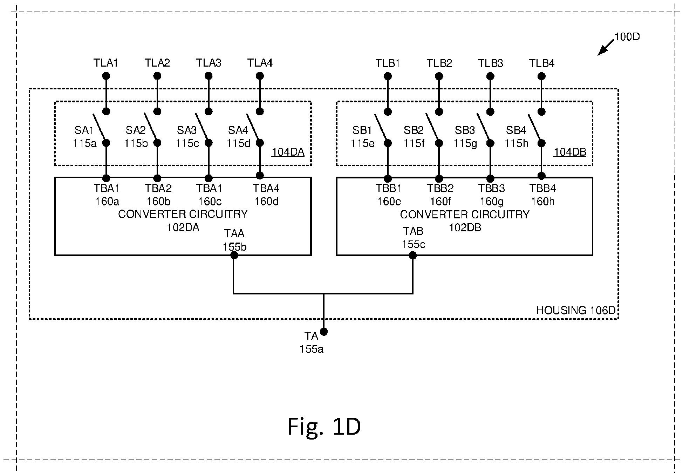

Fig. 1D shows an example of a power conversion device 100D. A power conversion device 100D may include a plurality of converter circuitries 102DA and 102DB, a plurality of switching circuitries 104DA and 104DB, and a housing 106D. Each converter circuitry 102DA and/or 102DB may include a plurality of power conversion circuitries. The plurality of power conversion circuitries may include, for example, DC to DC conversion circuitry, DC to AC conversion circuitry, AC to DC conversion circuitry, AC to AC conversion circuitry, etc. Each converter circuitry 102DA and/or 102DB may include one or more terminals TA 155a configured to connect to a power source 108.

There may be one or more power sources. There may be one power source for each converter circuitry. Each converter circuitry may connect to a separate power source and/or a common power source. Fig. 1D shows terminal TAA 155b and terminal TAB 155c connecting to a common terminal TA 155a that may be connected to a common power source 108. Terminal TAA 155b and terminal TAB 155c may be connected to different separate power sources 108.

Each converter circuitry 102DA and/or 102DB may include a plurality of terminals TB configured to connect to switching circuitry 104DA and/or 104DB. There may be one common switching circuitry 104D and/or a respective switching circuitry 104DA and 104DB. In Fig. 1D two separate respective switching circuitries are shown (e.g., switching circuitry 104DA and switching circuitry 104DB).

Each switching circuitry 104D may comprise a plurality of switches SA 115a - 115d and/or SB 115e - 115h, each of the switches SA, SB having a first terminal configured to connect to a terminal TB 160a- 160h (e.g., TBA1-4 and/or TBB1-4) of converter circuitry 102DA and/or 102DB, and a second terminal configured to connect to a terminal TL. As described herein, for simplicity, there may be one or more lines even though only one is shown. Each terminal TL may be configured to connect to a power bus line. The power bus line may be a first DC bus line, second DC bus line, first AC bus line, second AC bus line, etc. The power bus line may be connected to common power bus lines and/or different power bus lines. Terminal TLA1, for example, may be connected to the same power bus line as TLB1 or a different power bus line.

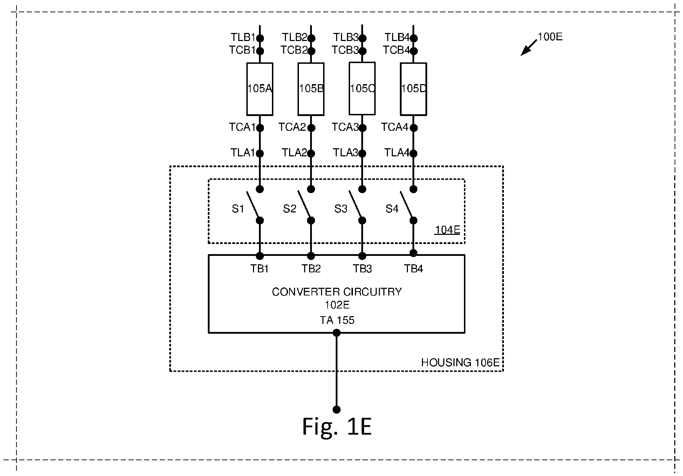

Fig. 1E shows an example of a power conversion device 100E. A power conversion device 100E may include additional converter circuitry 105A - 105D. Additional converter circuitry 105A - 105D may include DC to DC power conversion circuitry, AC to AC power conversion circuitry, DC to AC power conversion circuitry, AC to DC power conversion circuitry, etc. Additional converter circuitry 105A - 105D may be connected between the switching circuitry 104 and one or more of the power buses. Additional converter circuitry 105A - 105D may be external to housing 106. Additional converter circuitry 105A - 105D may be internal to housing 106E.

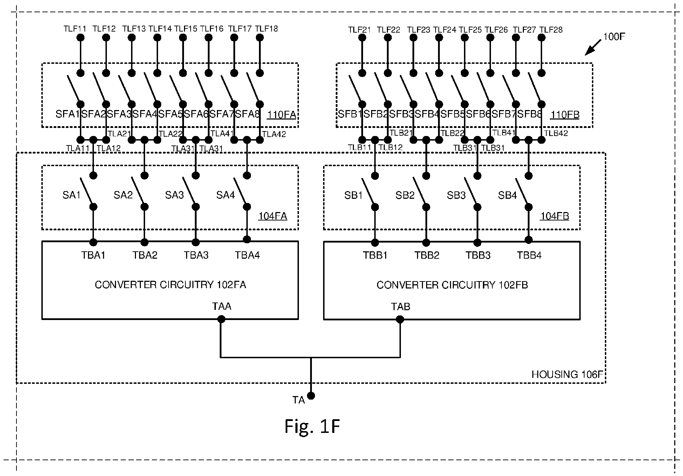

Fig. 1F shows an example of a power conversion device 100F. A power conversion device 100F may include additional switching circuitry 110F. Additional switching circuitry 110FA and 110FB may add additional connections with switches to power buses. Additional switching circuitry 110FA and/or 110FB may be external to a housing 106F. Additional switching circuitry 110 may be internal to the housing 106F.

Each of the terminals TLF may be connected to a power bus. The terminals TLF may be connected to one or more DC buses, one or more AC buses, or different combinations of one or more DC buses and/or one or more AC buses. The terminals of each additional switching circuitry 110FA and/or 110FB, for example, may be connected to the same and/or different power buses as another additional switching circuitry 110. Terminal TLF11 of switching circuitry 110FA, for example, may be connected to the same power bus (DC bus or AC bus) as terminal TLF21 of switching circuitry 110FB. Terminal TLF11 of switching circuitry 110FA may be connected to a different power bus (DC bus or AC bus) as terminal TLF21 (e.g., terminal TLF21 may be connected to a different DC bus or AC bus). Terminal TLF11 of switching circuitry 110FA, for example, may be connected to the same power bus (DC bus or AC bus) as terminal TLF13 of switching circuitry 110FA. Terminal TLF11 of switching circuitry 110FA, for example, may be connected to a different power bus (DC bus or AC bus) as terminal TLF13 of switching circuitry 110FA.

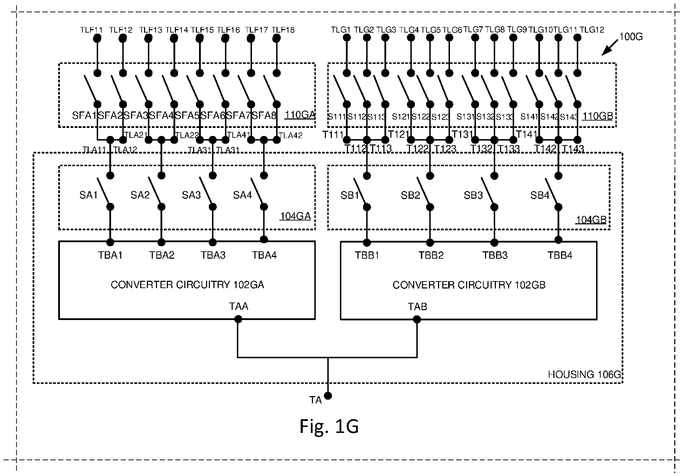

Fig. 1G shows an example of a power conversion device 100G. A power conversion device 100G may include additional switching circuitry 110GB which may have three lines with switches for each terminal from switching circuitry 104GB. Additional switching circuitry 110GB may be external to a housing 106G. Additional switching circuitry 110GB may be internal to the housing 106G. Each of the terminals TLG may be connected to a power bus. The terminals TLG may be connected to one or more DC buses, one or more AC buses, and/or different combinations of one or more DC buses and one or more AC buses.

As an example, terminal TLG1 may be connected to a first DC bus, terminal TLG2 may be connected to a second DC bus, and terminal TLG3 may be connected to a first AC bus. Terminal TLG4 may be connected to the first DC bus, terminal TLGS may be connected to the second DC bus, and terminal TLG6 may be connected to a second AC bus. Terminal TLG7 may be connected to the first DC bus, terminal TLG8 may be connected to the second DC bus, and/or terminal TLG9 may be connected to a third AC bus. Terminal TLG10 may be connected to the first DC bus, terminal TLG11 may be connected to the second DC bus, and terminal TLG12 may be connected to a fourth AC bus. One or more of the buses may be a neutral bus. One or more of the buses may be designated as a backup bus for loads that are designated as backup loads. Backup loads may be considered critical loads.

As another example, terminal TLG1 may be connected to a first DC bus, terminal TLG2 may be connected to a second DC bus, and terminal TLG3 may be connected to a first AC bus. Terminal TLG4 may be connected to the first DC bus, terminal TLGS may be connected to the second DC bus, and terminal TLG6 may be connected to the first AC bus, etc.

As another example, terminal TLG1 may be connected to a first DC bus, terminal TLG2 may be connected to a second DC bus, and terminal TLG3 may be connected to a first AC bus. Terminal TLG4 may be connected to a third DC bus, terminal TLG5 may be connected to a fourth DC bus, and terminal TLG6 may be connected to the first AC bus or a second AC bus, etc.

As another example, terminal TLF11 of switching circuitry 104GA and terminal TLG1 of switching circuitry 104GB may be connected to a first DC bus, terminal TLF12 of switching circuitry 104GA and terminal TLG2 of switching circuitry 104GB may be connected to a second DC bus, and terminal TLG3 of switching circuitry 104GB may be connected to a first AC bus.

As another example, terminal TLF11 of switching circuitry 104GA may be connected to a first DC bus, terminal TLG1 of switching circuitry 104GB may be connected to a second DC bus, terminal TLF12 of switching circuitry 104GA may be connected to a third DC bus and terminal TLG2 of switching circuitry 104GB may be connected to a fourth DC bus, and terminal TLG3 of switching circuitry 104GB may be connected to a first AC bus.

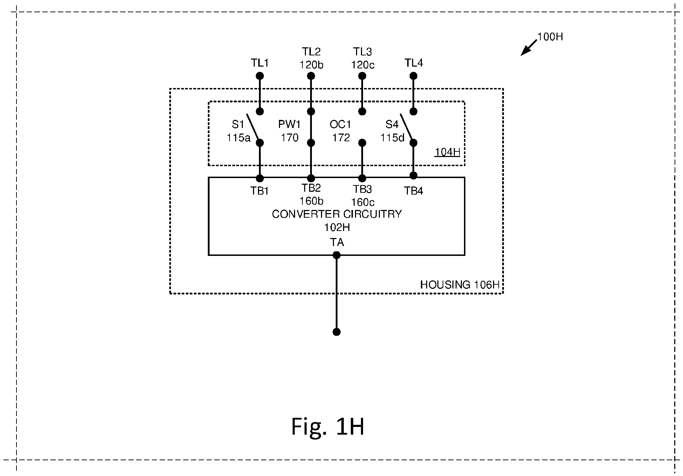

Fig. 1H shows an example of a power conversion device 100H. A power conversion device 100H may include switching circuitry 104H with set connections and/or set disconnections. In place of one or more of the switches, for example, there may be set pathways (e.g., PW1 170) and/or set open connections (e.g., OC1 172) between the converter circuitry 102H and the power bus. Switching circuitry 104H with set connections and/or set disconnections may also include switches S1 115a and/or S4 115d for some lines for switchable connections. The set pathways may be a short circuit type of direct connection between two terminals. A pathway PW1 170, for example, may be an electrical connector always directly connected between terminal TB2 160b of converter circuitry 102H and terminal TL2 120b connected to a power bus. This pathway may be set as connected. The set open connections may be open circuit type disconnections between terminals. Open connection OC1 172, for example, may always disconnect terminal TB3 160c of converter circuitry 102H and terminal TL3 120c which may be connected to a power bus. This potential pathway may be set as disconnected.

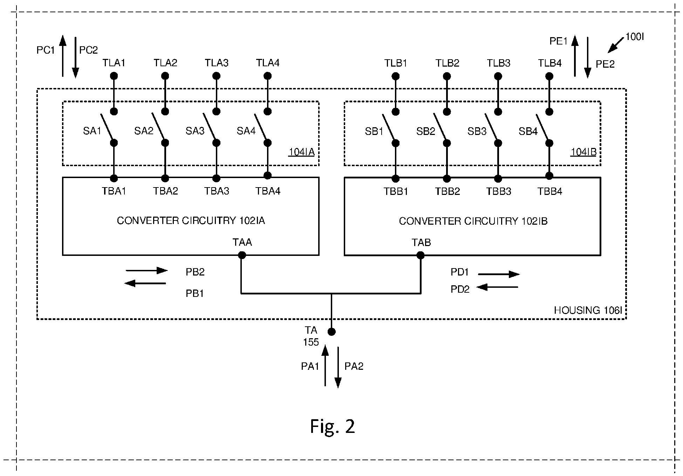

Fig. 2 shows an example power flow diagram of a power conversion device 100I. Power conversion device 100I may be similar to power conversion device 100D shown in Fig. 1D, or other power conversion devices. Power conversion device 100I is used as an example of the power flow diagram, but similar power flows may be used for other power conversion devices 100.

Power conversion device 100I may include converter circuitry 102IA and/or 102IB, and/or switching circuitry 104IA and/or 104IB. Power may flow from terminal TA (e.g., from a power source connected to terminal TA), via converter circuitry 102I and switching circuitry 104I to terminal TL of a power bus. For example, power PA1 may flow from the power source to converter circuitry 102IA. Power PA1 may be converted by converter circuitry 102IA to power PB1 (e.g., voltage or current of the power may be changed, and/or the power may be changed from AC to DC, DC to AC, first DC to second DC, first AC to second AC, amplitude and/or frequency may be changed, etc.). Power PB1 may be provided to a power bus via switching circuitry 104IA via one or more of the switches SA, represented as power PC1, which may be the same as or similar to power PB1. In this example a power source connected to terminal TA 155 may be operating in a discharge mode of operation to provide power to one or more power buses. One or more loads may be connected to the one or more power buses and/or may be configured to receive the power provided by the power source. Similarly, power may be provided from the power source to a power bus (e.g., from terminal TA to a terminal TLB) via converter circuitry 102IB and switching circuitry 104IB. For example, power PA1 may be converted to power PD1 and provided to the power bus as power PE1, which may be the same as or similar to power PD1. In some examples, power PA1 may be split between power PB1 and power PD1.

Power may flow from terminal TL (e.g., from a power bus connected to terminal TL), via switching circuitry 104I and converter circuitry 102I to terminal TA. Power PC2, for example, may flow from the power bus to switching circuitry 104IA. Power PC2 may be converted by converter circuitry 104IA to power PB2 (e.g., voltage and/or current of the power may be changed, or the power may be changed from AC to DC, DC to AC, first DC to second DC, first AC to second AC, amplitude and/or frequency may be changed, etc.). Power PB2 may be provided to a power source via terminal TA, represented as power PA2, which may be the same as or similar to power PB2. In this example a power source connected to terminal TA may be operating in a charge mode of operation to receive power from one or more power buses. The power source may be one or more loads connected to the one or more power buses and configured to receive the power provided by the power bus. The power source, for example, may be a battery that receives charge from one or more power buses and/or one or more other power source connected to one or more of the power buses. One or more power supplies may be connected to the one or more power buses (e.g., the power supplies may be an electrical grid, batteries, power generators, PV generators, wind generators, fuel cell generators, etc.). A first power source, for example, may receive power from a second power source connected to a common power bus. One of the power sources may be a PV generator and one of the power sources may be a battery. One or both of the power sources, for example, may be batteries, etc. In a similar manner power may be provided from the power bus to the power source, from terminal TLB to a terminal TA, via switching circuitry 104IB and converter circuitry 102IB. For example, power PE2 may be converted to power PD2 and provided to the power source as power PA2 (which may be the same as or similar to power PD2). Power PA2, in some examples, may be combined from power PB2 and power PD2.

Power may flow from a first terminal TL, from a first power bus, to a second terminal TL of a second power bus. For example, power may flow from a first terminal TL connected to a first power bus via a first switching circuitry 104I and a first converter circuitry 102I to a second converter circuitry 102I and a second switching circuitry 104I connected to a second terminal TL connected to a second power bus. Power PC2, for example, may flow from a first power bus to a first switching circuitry 104IA. Power PC2 may be converted by the first converter circuitry 104IA to power PB2 (e.g., voltage or current of the power may be changed, or the power may be changed from AC to DC, DC to AC, first DC to second DC, first AC to second AC, amplitude and/or frequency may be changed, etc.). Power PB2 may be provided to a second converter circuitry 102IB via terminal TAB. In this example there might be no power source connected to terminal TA, or a power source might be, using a switch, disconnected from terminal TA to avoid power being provided to the power source in this mode of operation. Power PB2 may be converted by the second converter circuitry 102IB to power PD1 (e.g., voltage or current of the power may be changed, or the power may be changed from AC to DC, DC to AC, first DC to second DC, first AC to second AC, amplitude and/or frequency may be changed, etc.). Power PB2 may not be substantially converted and power PD1 may be the same as or similar to power PB2. Power PD1 may be provided to a power bus via second switching circuitry 104IB via one or more of the switches SB, represented as power PE1, which may be the same as or similar to power PD1. One or more power supplies, in this example, may be connected to the one or more first power buses (e.g., power supplies may be an electrical grid, batteries, power generators, PV generators, wind generators, fuel cell generators, etc.). One or more loads may be connected to one or more second power buses. The one or more loads connected to the one or more second power buses may be configured to receive power provided by the one or more power supplies connected to the one or more first power buses. Similarly, power may be provided from the second power bus to the first power bus, from terminal TLB to terminal TLA, via second switching circuitry 104IB, second converter circuitry 102IB, first converter circuitry 102IA, and first switching circuitry 104IA. Power PE2, for example, may be converted to power PD2 and provided to converter circuitry 102IA which may convert power PD2 to power PB1 (or power PB1 may be the same as or similar to power PD2) and provided to the first power bus as power PC1 (which may be the same as or similar to power PB1). In some examples power PC1 may be combined from a plurality of powers PB1. Similarly, in some examples power PD2 may be combined from a plurality of powers PE2, etc.

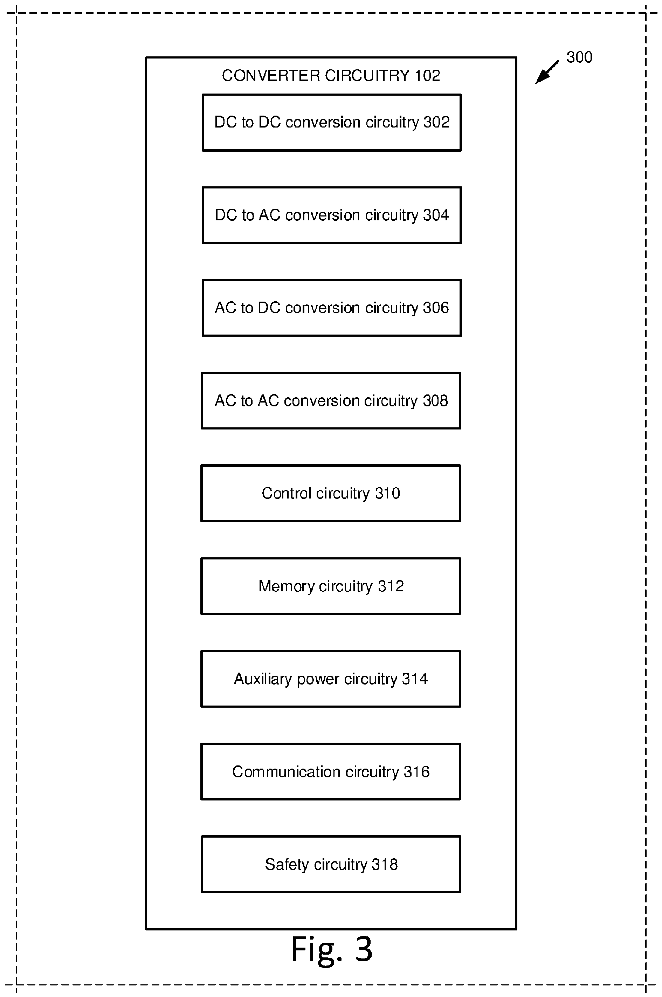

Fig. 3 shows an example of converter circuitry 102. Elements of the converter circuitry 102 may be the same as, or similar to, elements of converter circuitries 102 described above. Converter circuitry 102 may include DC to DC conversion circuitry 302, DC to AC conversion circuitry 304, AC to DC conversion circuitry 306, AC to AC conversion circuitry 308, control circuitry 310, memory circuitry 312, auxiliary power circuitry 314, communication circuitry 316, and safety circuitry 318. These elements may be internal or external to a housing of converter circuitry 102.

DC to DC conversion circuitry 302 may be configured to convert a first DC power to a second DC power. DC to DC conversion circuitry 302 may be configured to convert a first voltage to a second voltage, a first current to a second current, a first amplitude to a second amplitude, etc.

DC to AC conversion circuitry 304 may be configured to convert a first DC power to a second AC power. DC to AC conversion circuitry 304 may be configured to convert a first voltage to a second voltage, a first current to a second current, a first amplitude to a second amplitude, etc.

AC to DC conversion circuitry 306 may be configured to convert a first AC power to a second DC power. AC to DC conversion circuitry 306 may be configured to convert a first voltage to a second voltage, a first current to a second current, a first amplitude to a second amplitude, etc.

AC to AC conversion circuitry 308 may be configured to convert a first AC power to a second AC power. AC to AC conversion circuitry 304 may be configured to convert a first voltage to a second voltage, a first current to a second current, a first amplitude to a second amplitude, a first frequency to a second frequency, etc.

Control circuitry 310 may be configured to control one or more switches. Control circuitry 310 may be configured to control one or more switches of converter circuitry 102, switching circuitry 104, additional converter circuitry 105, additional switching circuitry 110, etc. Control circuitry 310 may be configured to obtain and process data. Control circuitry 308 may be configured to make determinations and/or transmit control signals. Control circuitry 310 may also be referred to as a controller or processor circuitry. Control circuitry 310 may be distributed among different converter circuitries 102 and/or centralized as a central control circuitry for one or more different converter circuitries 102.

Memory circuitry 312 may be configured to store data (e.g., historical data, identification data, etc.). Memory circuitry may be configured to store historical modes of operation (e.g., under different circumstances, for example, time, weather, etc.).

Auxiliary power circuitry 314 may be configured to provide auxiliary power to elements of converter circuitry 102. Auxiliary power, for example, may be provided to control circuitry, memory circuitry, communication circuitry, safety circuitry, etc. Auxiliary power, for example, may be provided when converter circuitry 102 may be disconnected from power source 108.

Communication circuitry 316 may be configured to transmit and/or receive data. Communication circuitry 316 may be configured to perform wired and/or wireless (e.g., wi-fi, mobile) communications. Communication circuitry 316 may include transmitter circuitry and/or receiver circuitry. The transmitter circuitry may be configured to transmit data, control signals, and/or communication signals, and the receiver circuitry may be configured to receive data, control signals, and/or communication signals.

Safety circuitry 316 may be configured to provide bypass, shutdown, and/or discharge during emergency situations (e.g., in cases of malfunction, overcurrent, overvoltage, etc.). Safety circuitry 316 may include one or more fuses, safety switches, resistors, etc.

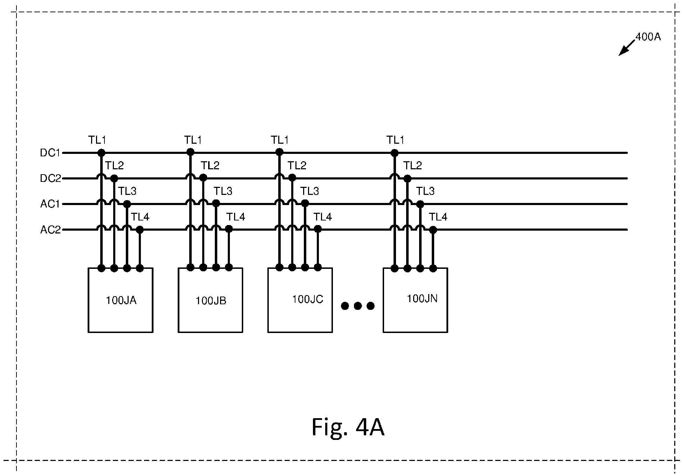

Figs. 4A - 4D show examples of power systems. Fig. 4A shows an example of a power system 400A. A power system 400A may include a plurality of power conversion devices 100J (e.g., 100JA, 100JB, 100JC, ... 100JN, ... etc.) and/or a plurality of power buses. Power buses may include a first DC bus DC1, a second DC bus DC2, a first AC bus AC1, and a second AC bus AC2. Power systems 400A may have more or less power conversion devices 100J (e.g., 100JA, 100JB, 100JC, ... 100JN, ... etc.) and more or less power buses. Elements of power conversion device 100J (e.g., 100JA, 100JB, 100JC, ... 100JN, ... etc.) may be the same as, or similar to, elements of power conversion devices 100 as described above.

Each power conversion device 100J (e.g., 100JA, 100JB, 100JC, ... 100JN, ... etc.) may be connected to a plurality of power buses via terminals TL. Each power conversion device 100J (e.g., 100JA, 100JB, 100JC, ... 100JN, ... etc.), for example, may be connected to a first DC bus DC1 via terminal TL1, to a second DC bus DC2 via terminal TL2, to a first AC bus AC1 via terminal TL3, and to a second AC bus AC2 via terminal TL4. Some of the power conversion devices 100J (e.g., 100JA, 100JB, 100JC, ... 100JN, ... etc.) may be connected to different power buses with more or less terminals.

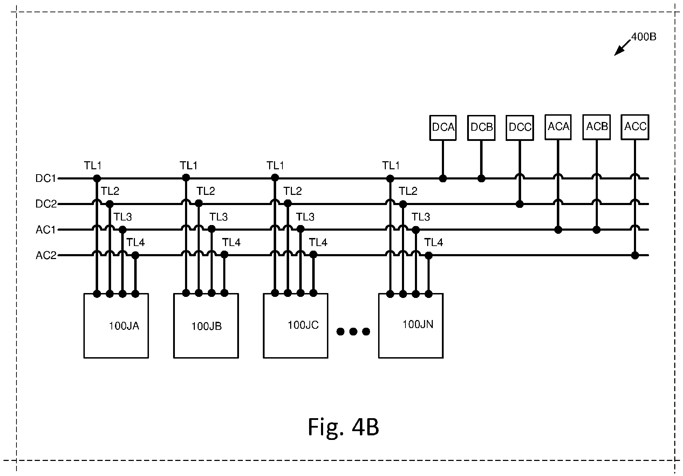

Fig. 4B shows an example of a power system 400B. A power system 400B may include a plurality of power conversion devices 100J (e.g., 100JA, 100JB, 100JC, ... 100JN, ... etc.), a plurality of power buses, and/or a plurality of devices (e.g., loads and/or supplies) connected to the power buses. The devices, for example, may include a first DC device DCA and a second DC device DCB connected to bus DC1, a third DC device DCC connected to DC bus DC2, a first AC device ACA and a second AC device ACB connected to AC bus AC1, and a third AC device ACC connected to bus AC2.

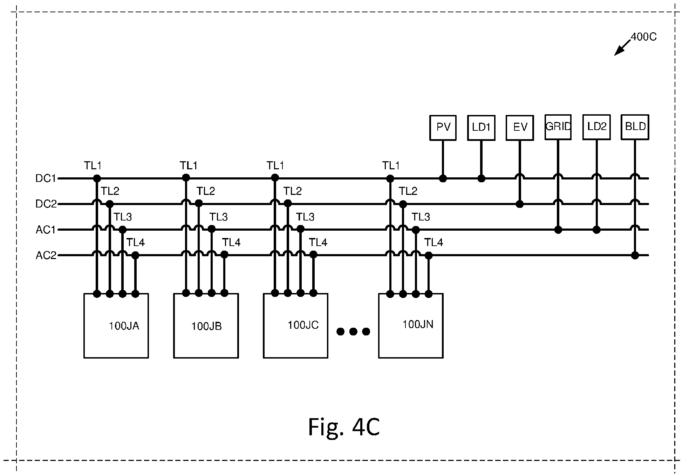

Fig. 4C shows an example of a power system 400C. A power system 400C may include a plurality of power conversion devices 100J (e.g., 100JA, 100JB, 100JC, ... 100JN, ... etc.), a plurality of power buses, and/or a plurality of devices (e.g., loads and/or supplies) connected to the power buses. The devices may include a first DC device photovoltaic device PV (e.g., a supply) and a second DC device LD1 (e.g., a load) connected to bus DC1, a third DC device electric vehicle EV (e.g., a supply or a load) connected to DC bus DC2, a first AC device which may be an electrical grid GRID (e.g., a supply or a load) and a second AC device LD1 (e.g., a load) connected to AC bus AC1, and a third AC device BLD (e.g., a backup load) connected to AC bus AC2. Power conversion devices 100J (e.g., 100JA, 100JB, 100JC, ... 100JN, ... etc.) may be configured to receive power from PV and/or provide power to LD1. Power conversion devices 100J (e.g., 100JA, 100JB, 100JC, ... 100JN, ... etc.) may be configured to receive power from EV or provide power to EV. DC bus DC2 may be a power bus dedicated to one or more EV devices. AC bus AC2 may be a power bus dedicated to one or more backup devices. One or more DC buses may also be dedicated to one or more backup devices.

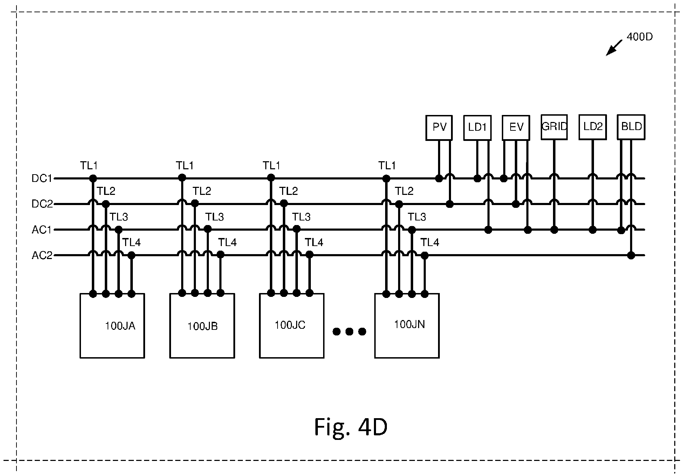

Fig. 4D shows an example power system 400D. Power system 400C may include a plurality of power conversion devices 100J (e.g., 100JA, 100JB, 100JC, ... 100JN, ... etc.), a plurality of power buses, and/or a plurality of devices (e.g., loads or supplies) connected to the power buses. The plurality of devices may be connected to one or more power buses. The plurality of devices, for example, may be connected to one or more DC power buses and/or one or more AC power buses. A photovoltaic device PV (e.g., a supply) may be connected to a first DC bus DC1 and a second DC bus DC2. Device LD1 (e.g., a load) may be connected to bus DC1 and bus AC1. Electric vehicle EV (e.g., a supply or a load) may be connected to first DC bus DC1, second DC bus DC2, and AC bus AC1. Electrical grid GRID (e.g., a supply or a load) and device LD2 (e.g., a load) may be connected to AC bus AC1. Device BLD (e.g., a backup load) may be connected to first AC bus AC1 and second AC bus AC2. For example, device BLD may receive power even when one or more power supplies are unable to provide power (e.g., the electrical grid GRID may be unable to provide power). One or more power conversion devices 100J (e.g., 100JA, 100JB, 100JC, ... 100JN, ... etc.) may be configured to help transfer power to or from one or more of the devices connected to the power bus to or from one or more power sources associated with the power conversion devices 100J (e.g., 100JA, 100JB, 100JC, ... 100JN, ... etc.). One or more power conversion devices 100J (e.g., 100JA, 100JB, 100JC, ... 100JN, ... etc.) may be configured to help transfer power to or from one or more of the devices connected to the power bus to or from one or more of the other devices connected to the power bus. One or more power conversion devices 100J (e.g., 100JA, 100JB, 100JC, ... 100JN, ... etc.) may be configured to help transfer power to or from one or more of the power sources associated with the power conversion devices 100J (e.g., 100JA, 100JB, 100JC, ... 100JN, ... etc.) and connected to one or more of the power buses to or from one or more other power sources associated with the power conversion devices 100J (e.g., 100JA, 100JB, 100JC, ... 100JN, ... etc.) and connected to one or more of the power buses.

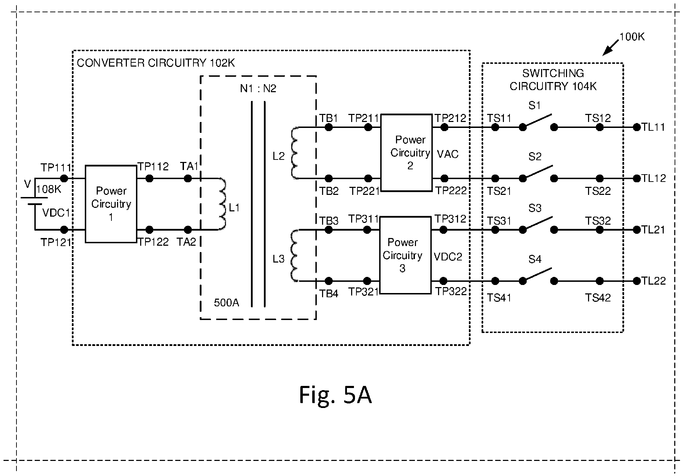

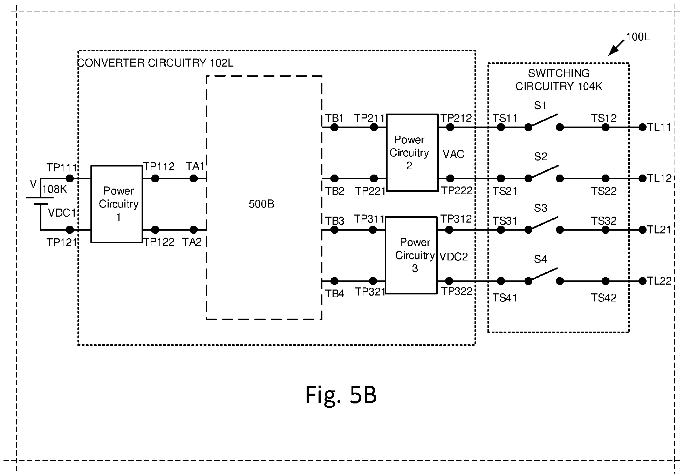

Figs. 5A and 5B show examples of power control circuitry. Fig. 5A shows an example of power conversion circuitry 100K. Elements of power conversion circuitry 100K may be the same as, or similar to, elements of power conversion circuitries 100 described above. Fig. 5A is a two line diagram which shows electrical connections between different elements using two lines instead of a single line.

Power conversion circuitry 100K may include a power source 108K, converter circuitry 102K, and/or switching circuitry 104K. Power source 108K may be a DC battery V that is bidirectional and rechargeable (i.e., the battery may be discharged and charged). Converter circuitry 102K includes a plurality of power circuitries and isolation circuitry 500A. Isolation circuitry 500A may include a plurality of inductors L1, L2, and/or L3 that may be windings (e.g., a first winding, a second winding, and a third winding) of a transformer. Isolation circuitry 500A may also include a core for a transformer. The one or more windings may be wound on different portions of the core (e.g., a first portion, a second portion, a third portion, etc.). Converter circuitry 102 may include more or less power circuitries than shown in Fig. 5A.

For example, power circuitry 1 may be bidirectional DC to AC conversion circuitry, power circuitry 2 may be bidirectional AC to AC conversion circuitry, and power circuitry 3 may be bidirectional AC to DC conversion circuitry. Power circuitry 1 together with power circuitry 2 may be considered bidirectional DC to AC, and AC to DC, conversion circuitry. Power circuitry 1 together with power circuitry 3 may be considered bidirectional DC to DC conversion circuitry. Power circuitry 2 together with power circuitry 3 may be considered bidirectional AC to DC, and DC to AC, conversion circuitry. Additional connections to power buses and/or additional power circuitries may also be AC to AC conversion circuitries between the power bus lines (e.g., using power circuitry 2 and another AC to AC power circuitry connected to a different AC bus), and DC to DC conversion circuitries between the power bus lines (e.g., using power circuitry 3 and another DC to DC power circuitry connected to another DC bus). Power source 108K may be an AC power source and/or power circuitry 1 may be an AC to AC conversion circuitry.

Power circuitry 1 may convert a DC voltage VDC1 provided by power supply 108K to an AC voltage, if power source 108K is a DC power source and power circuitry 1 is a DC to AC conversion circuitry. An AC voltage may be transformed (e.g., stepped up or stepped down) and provided to power circuitry 2 and/or power circuitry 3 via isolation circuitry 500A (e.g., the transformer including the windings and the core). Power circuitry 2 may convert the AC voltage to an AC voltage VAC that is provided to the switching circuitry 104K. Switching circuitry 104K may provide that AC voltage VAC to an AC bus via one or more switches S (e.g., switches S1 and S2) and one or more bus terminals TL (e.g., terminals TL11 and TL12). In a similar manner, power circuitry 3 may convert the AC voltage to a DC voltage VDC2 that may be provided to the switching circuitry 104K. Switching circuitry 104K may connect that DC voltage VDC2 to a DC bus via one or more switches S (e.g., switches S3 and S4) and/or one or more bus terminals TL (e.g., terminals TL21 and TL22).

Power conversion circuitry 100K may be bidirectional so that power may be provided from a power supply connected to the AC bus and/or to the DC bus to the power source 108K. A power supply, for example, may provide AC voltage VAC to power circuitry 2 via terminals TL (e.g., terminals TL11 and TL12) and switches S (e.g., switches S1 and S2). Power circuitry 2 may convert that AC voltage VAC to a second AC voltage (e.g., with a different frequency and or amplitude). That second AC voltage may be transformed (e.g., stepped up or stepped down) and/or provided to power circuitry 1 via the isolation circuitry 500A (e.g., the transformer including the windings and the core). Power circuitry 1 may convert the AC voltage to a DC voltage VDC1 that may be provided to the power source 108K (e.g., for charging the power source 108K). In a similar manner, a power supply may provide DC voltage VDC2 to power circuitry 3 via terminals TL (e.g., terminals TL21 and TL22) and switches S (e.g., switches S3 and S4). Power circuitry 3 may convert that DC voltage VDC2 to an AC voltage. That AC voltage may be transformed (e.g., stepped up or stepped down) and provided to power circuitry 1 via the isolation circuitry 500A (e.g., the transformer including the windings and the core). Power circuitry 1 may convert the AC voltage to a DC voltage VDC1 that is provided to the power source 108K (e.g., for charging the power source 108K).

Similarly, power conversion circuitry 100K may be configured to provide power supplied from a first power bus to a second power bus. Power may be supplied, for example, from a power supply connected to the first bus, e.g., an AC bus (or a DC bus), to a load connected to the second bus, e.g., a DC bus (or an AC bus). The power supply may provide AC voltage VAC to power circuitry 2 via first terminals TL (e.g., terminals TL11 and TL12) and first switches S (e.g., switches S1 and S2). Power circuitry 2 may convert that AC voltage VAC to a second AC voltage (e.g., with a different frequency and or amplitude). That second AC voltage may be transformed (e.g., stepped up or stepped down) and provided to power circuitry 3 via the isolation circuitry 500A (e.g., the transformer including the windings and the core). Power circuitry 3 may convert the AC voltage to a DC voltage VDC2 that is provided to a DC bus via one or more second switches S (e.g., switches S3 and S4) and one or more second bus terminals TL (e.g., terminals TL21 and TL22).

Terminal TL11 may connect to a first AC phase bus line, a second AC phase bus line, a neutral AC bus line, etc. Terminal TL12 may connect to a first AC phase bus line, a second AC phase bus line, a neutral AC bus line, etc. Terminal TL21 may connect to a positive DC bus line, a negative DC bus line, a neutral DC bus line, a ground DC bus line, etc. Terminal TL22 may connect to a positive DC bus line, a negative DC bus line, a neutral DC bus line, a ground DC bus line, etc.

Fig. 5B shows an example of power conversion circuitry 100L. Elements of power conversion circuitry 100L may be the same as, or similar to, elements of power conversion circuitries 100 described above. Fig. 5B, like Fig. 5A, is a two line diagram. Converter circuitry 102L may include circuitry 500B that may be converter circuitry without isolation. Similar to converter circuitry 102K, converter circuitry 102L may be configured for DC to DC conversion, DC to AC conversion, AC to DC conversion, AC to AC conversion, etc.

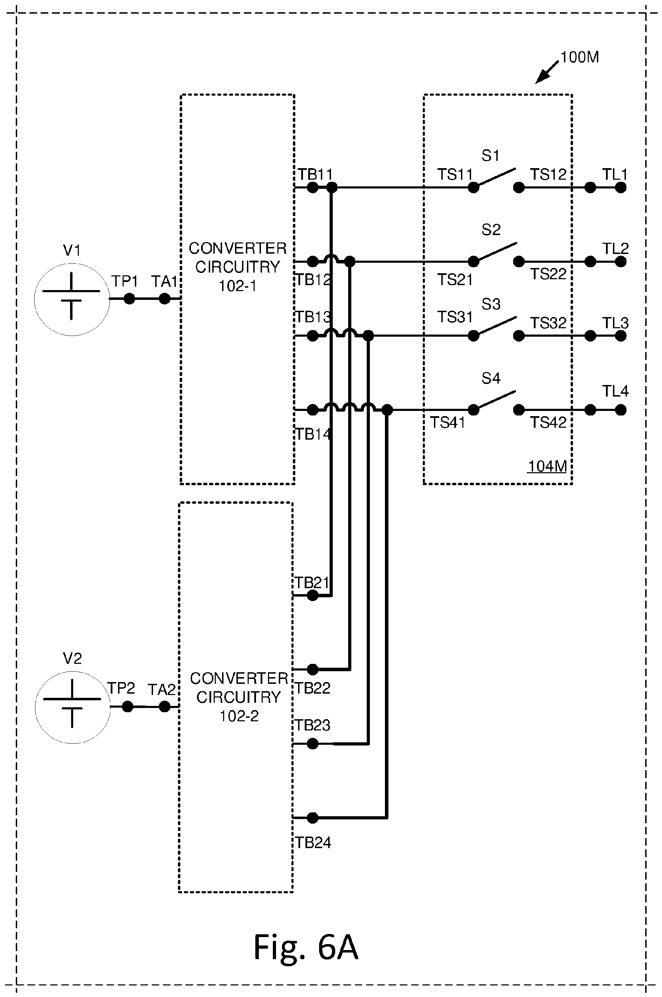

Figs. 6A - 6E show examples of power control circuitry. Fig. 6A shows an example of power conversion circuitry 100M. Elements of power conversion circuitry 100M may be the same as, or similar to, elements of power conversion circuitries 100 described above. Fig. 6A is a single line diagram which shows electrical connections between different elements using a single line which may represent one or more lines.

Power conversion circuitry 100M may include a plurality of converter circuitries 102 connected to a common switching circuitry 104M. The plurality of converter circuitries 102 may be connected in parallel to the common switching circuitry 104M. Switching circuitry 104M may include set connections or set disconnections (e.g., similar to switching circuitry 104H).

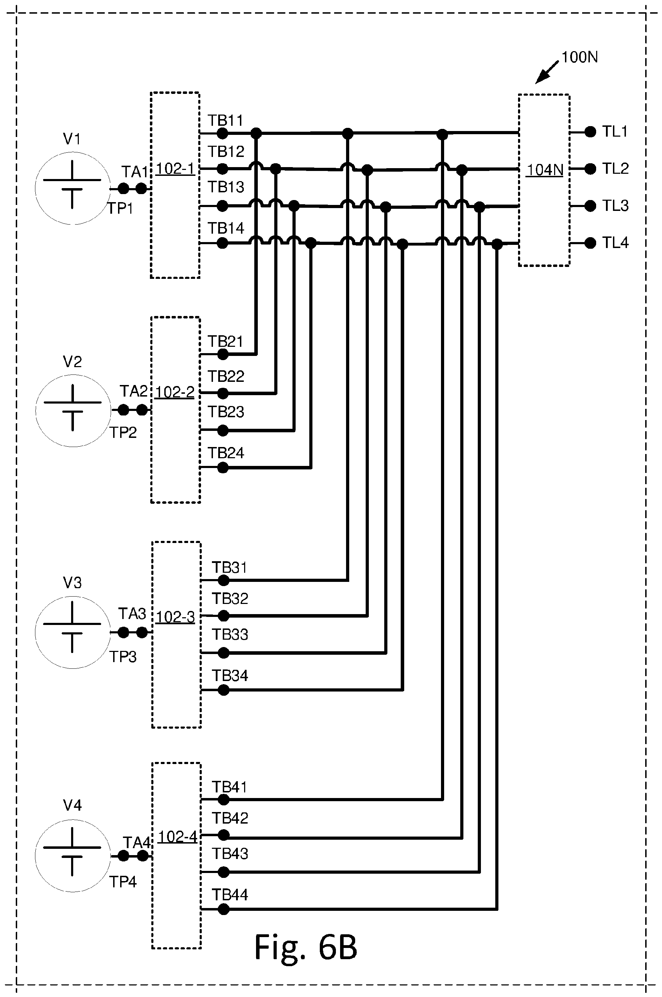

Fig. 6B shows an example of power conversion circuitry 100N. Elements of power conversion circuitry 100N may be the same as, or similar to, elements of power conversion circuitries 100 described above. Fig. 6B is a single line diagram which shows electrical connections between different elements using a single line which may represent one or more lines.

Power conversion circuitry 100N may include a plurality of converter circuitries 102 connected to a common switching circuitry 104N. The plurality of converter circuitries 102 may be connected in parallel to the common switching circuitry 104N. Switching circuitry 104N may include set connections or set disconnections (e.g., similar to switching circuitry 104H).

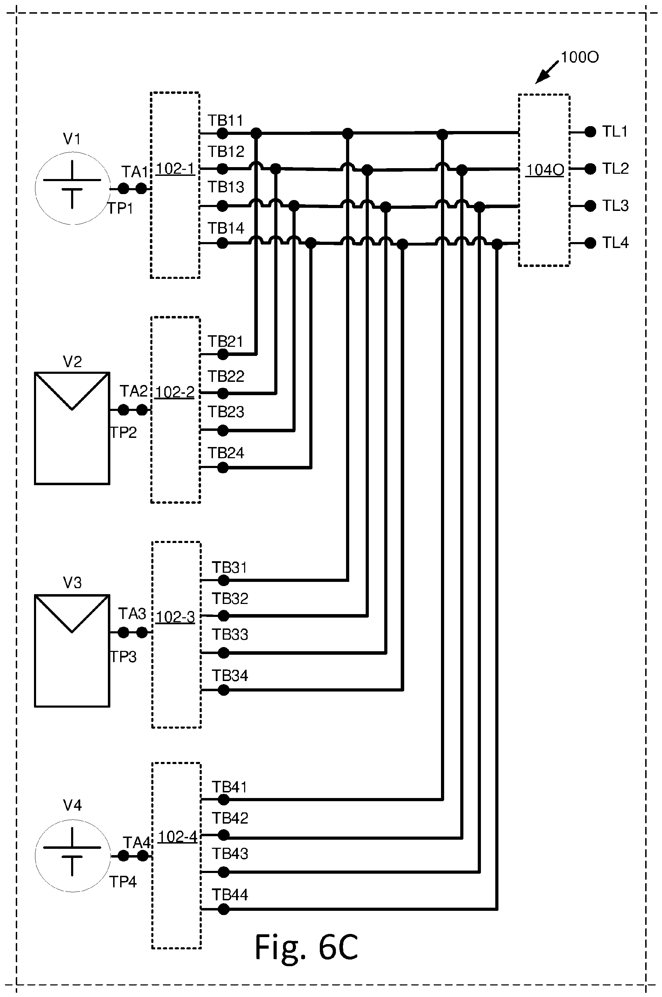

Fig. 6C shows an example of power conversion circuitry 100O. Elements of power conversion circuitry 100O may be the same as, or similar to, elements of power conversion circuitries 100 described above. Fig. 6C is a single line diagram which shows electrical connections between different elements using a single line which may represent one or more lines.

Power conversion circuitry 100O may include a plurality of converter circuitries 102 connected to a common switching circuitry 1040. The plurality of converter circuitries 102 may be connected in parallel to the common switching circuitry 1040. Switching circuitry 1040 may include set connections or set disconnections (e.g., similar to switching circuitry 104H). Power conversion circuitry 100O may have one or more bidirectional power sources, represented as power sources V1 and V4, and one or more unidirectional power sources (e.g., power sources that provide power but might not receive power), represented as power sources V2 and V3.

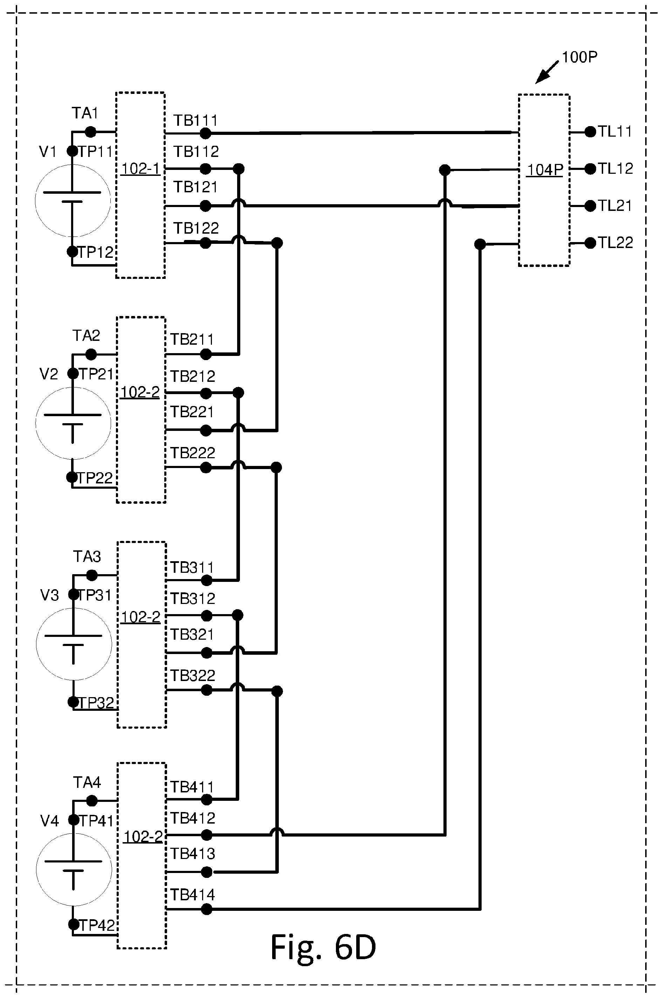

Fig. 6D shows an example of power conversion circuitry 100P. Elements of power conversion circuitry 100P may be the same as, or similar to, elements of power conversion circuitries 100 described above. Fig. 6D is a two line diagram which shows electrical connections between different elements using two lines instead of just a single line which may represent one or more lines.

Power conversion circuitry 100P may include a plurality of converter circuitries 102 connected to a common switching circuitry 104P. The plurality of converter circuitries 102 may be connected in series to the common switching circuitry 104P. A first pair of terminals TB of each converter circuitry 102, for example, may be connected in series between a first terminal TL11 of switching circuitry 104P and/or a second terminal TL12 of switching circuitry 104P. A second pair of terminals TB of each converter circuitry 102 may be connected in series between a third terminal TL21 of switching circuitry 104P and a fourth terminal TL22 of switching circuitry 104P, etc. Switching circuitry 104P may include set connections or set disconnections (e.g., similar to switching circuitry 104H).

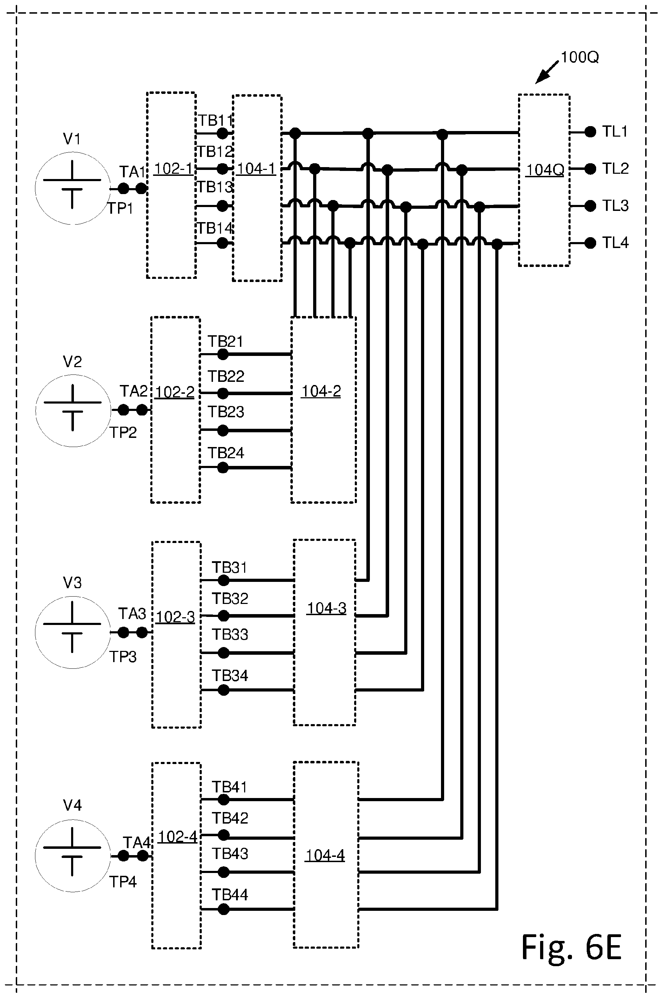

Fig. 6E shows an example of power conversion circuitry 100Q. Elements of power conversion circuitry 100Q may be the same as, or similar to, elements of power conversion circuitries 100 described above. Fig. 6E is a single line diagram which shows electrical connections between different elements using a single line which may represent one or more lines.

Power conversion circuitry 100Q may include a plurality of switching circuitries 104 connected to a common switching circuitry 104Q. One or more of the switching circuitries may be the same as or similar to additional switching circuitries 110. The plurality of switching circuitries 104 may be connected in parallel to the common switching circuitry 104Q. In some examples, the plurality of switching circuitries 104 may be connected in series to the common switching circuitry 104. One or more of the switching circuitries 104, and/or the additional switching circuitries 110, may include set connections and/or set disconnections (e.g., similar to switching circuitry 104H).

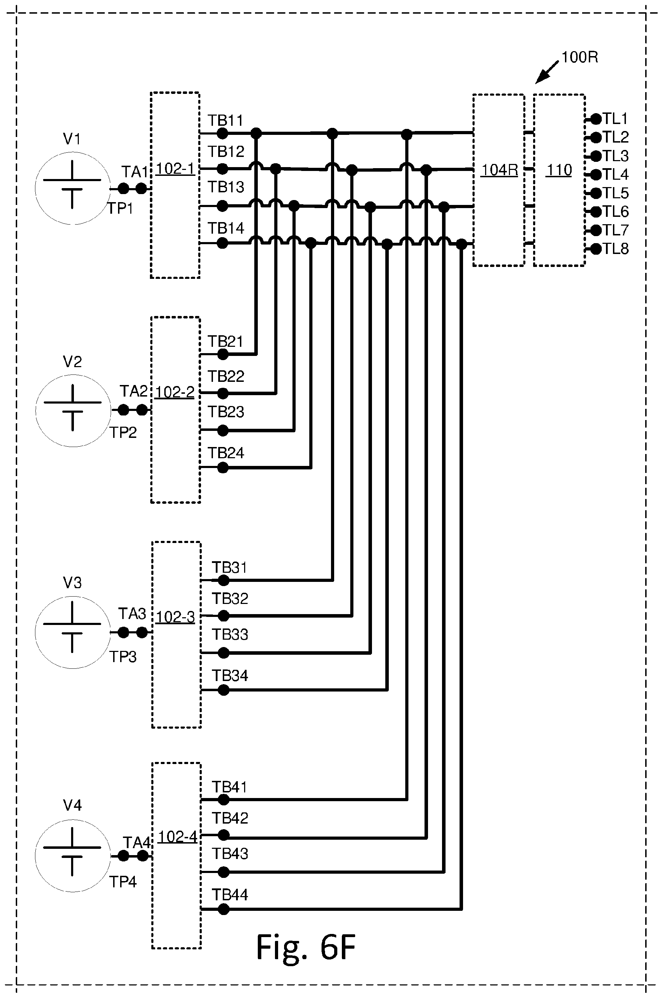

Fig. 6F shows an example of power conversion circuitry 100R. Elements of power conversion circuitry 100R may be the same as, or similar to, elements of power conversion circuitries 100 described above. Fig. 6F is a single line diagram which shows electrical connections between different elements using a single line which may represent one or more lines.

Power conversion circuitry 100R may include a plurality of converter circuitries 102 connected to a common switching circuitry 104R. The plurality of converter circuitries 102 may be connected in parallel to the common switching circuitry 104R. The plurality of switching circuitries 104 may be connected in series to the common switching circuitry 104. The common switching circuitry 104R may be connected to one or more additional switching circuitries 110. The common switching circuitry 104 and/or the additional switching circuitry 110 may include set connections and/or set disconnections (e.g., similar to switching circuitry 104H).

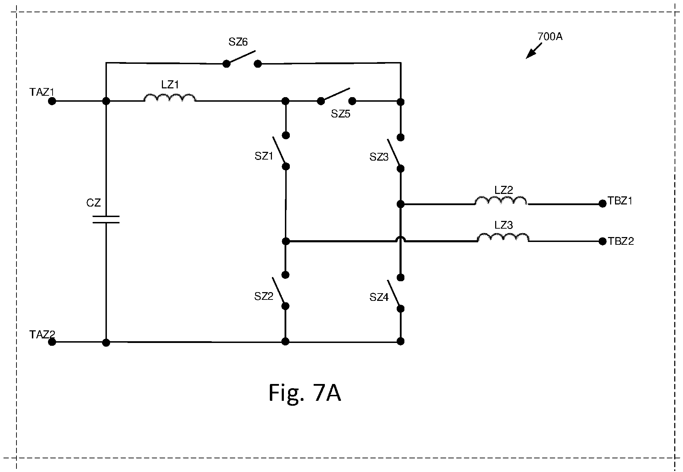

Figs. 7A - 7C show examples of converter circuitry. Fig. 7A shows an example of converter circuitry 700A. Converter circuitry 700A may be part of converter circuitry 102. Converter circuitry 700A may include a DC to DC converter mode of operation, a DC to AC mode of operation, and/or an AC to DC mode of operation. Converter circuitry 700A, for example, may have a buck mode of operation, a boost mode of operation, and a full bridge mode of operation. Converter circuitry 700A may include a plurality of switches S, a plurality of inductors L, and/or one or more capacitors C. The switches S may be any appropriate switches (e.g., transistors, relays, etc.), as detailed above. The switches S may be controlled to be in ON states, OFF states, pulse width modulation (PWM) states, etc.

The following chart may detail the various states of the switches in the different modes of operation:

| Switch | Buck Mode | Boost Mode | Full-Bridge Mode |
|---|---|---|---|
| SZ1 | PWM | PWM | PWM |
| SZ2 | PWM | ON | PWM |
| SZ3 | Optional PWM | ON | PWM |
| SZ4 | Optional PWM | OFF | PWM |
| SZ5 | Any state | PWM | ON |
| SZ6 | ON | OFF | ON |

Terminals TAZ may be configured to connect to one or more power sources. Terminals TBZ may be configured to connect to one or more switching circuits 104, and/or one or more power bus terminals TL.

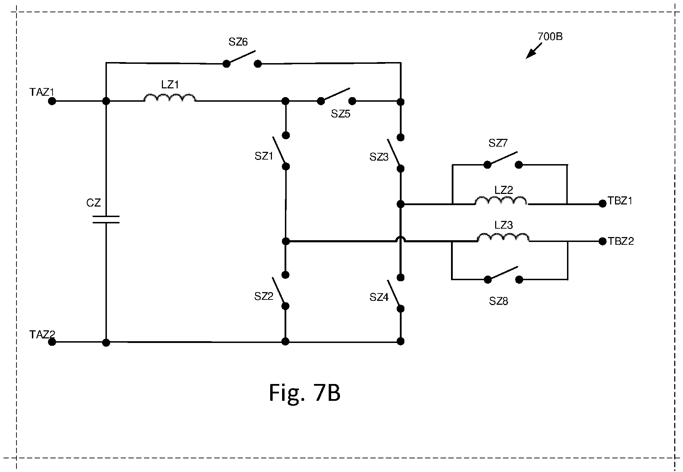

Fig. 7B shows an example of converter circuitry 700B. Converter circuitry 700B may be part of converter circuitry 102. Converter circuitry 700B may be similar to converter circuitry 700A except converter circuitry 700B may include one or more switches connected in parallel to one or more of the inductors L.

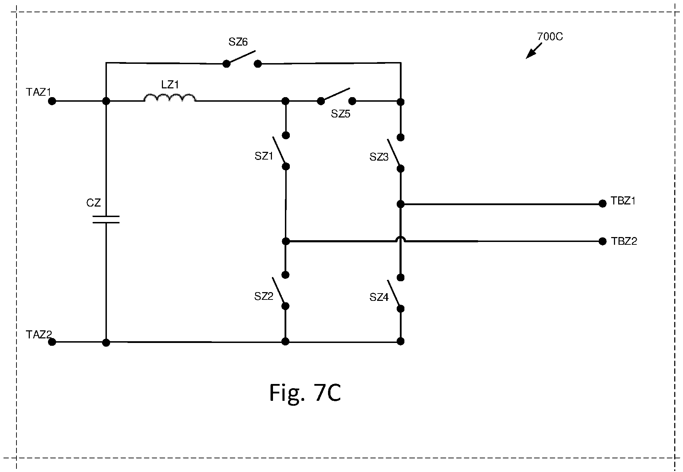

Fig. 7C shows an example of converter circuitry 700C. Converter circuitry 700C may be part of converter circuitry 102. Converter circuitry 700C may be similar to converter circuitry 700A except converter circuitry 700B may include one or more direct connections in place of one or more of the inductors L.

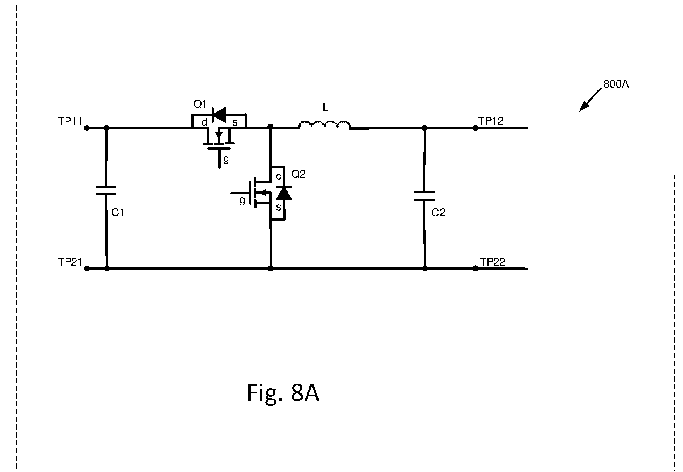

Figs. 8A - 8F show examples of converter circuitry. Fig. 8A shows an example of converter circuitry 800A. Converter circuitry 800A may be part of converter circuitry 102. Converter circuitry 800A may be DC to DC converter circuitry. Converter circuitry 800A may be buck converter circuitry.

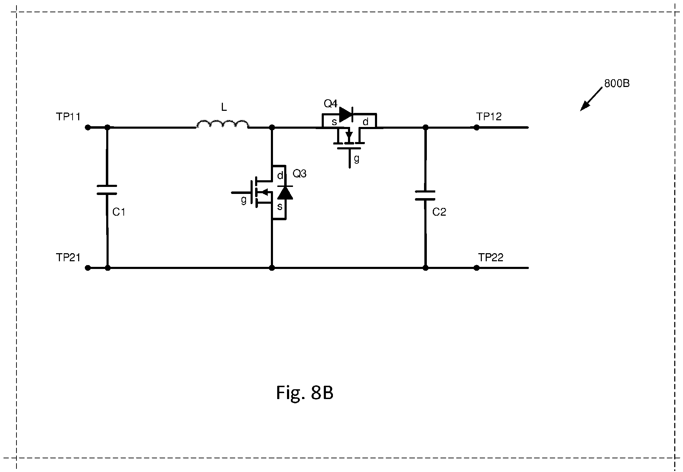

Fig. 8B shows an example of converter circuitry 800B. Converter circuitry 800B may be part of converter circuitry 102. Converter circuitry 800B may be DC to DC converter circuitry. Converter circuitry 800B may be boost converter circuitry.

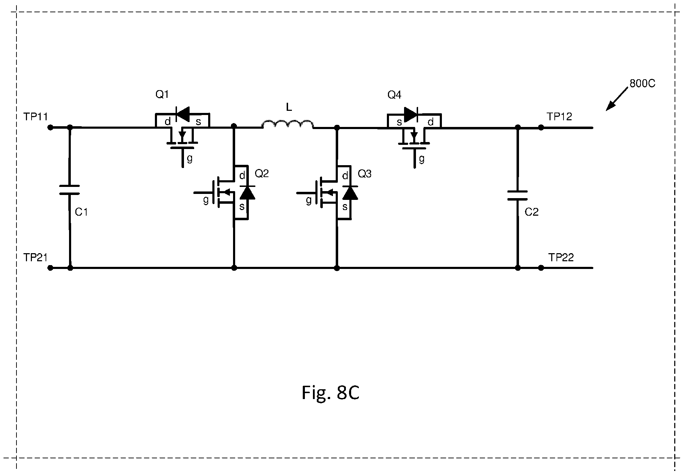

Fig. 8C shows an example of converter circuitry 800C. Converter circuitry 800C may be part of converter circuitry 102. Converter circuitry 800C may be DC to DC converter circuitry. Converter circuitry 800C may be buck+boost converter circuitry.

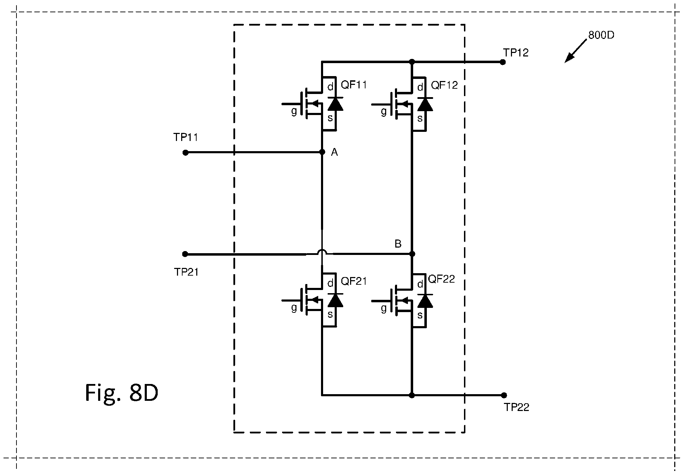

Fig. 8D shows an example of converter circuitry 800D. Converter circuitry 800D may be part of converter circuitry 102. Converter circuitry 800D may be DC to AC converter circuitry. Converter circuitry 800D may be full bridge converter circuitry. In some examples, converter circuitry 102 may include half bridge converter circuitry.

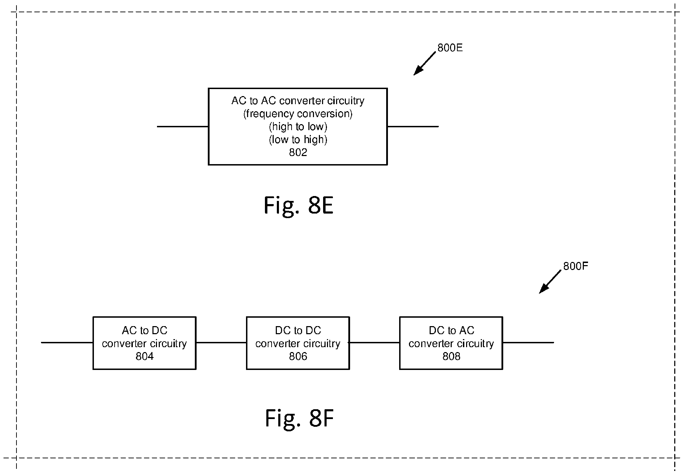

Fig. 8E shows an example of converter circuitry 800E. Converter circuitry 800E may be part of converter circuitry 102. Converter circuitry 800E may be AC to AC converter circuitry 802. Converter circuitry 800E may be configured for frequency conversion (e.g., from high to low or from low to high).

Fig. 8F shows an example of converter circuitry 800F. Converter circuitry 800D may be part of converter circuitry 102. Converter circuitry 800F may be AC to AC converter circuitry. Converter circuitry 800F may include AC to DC converter circuitry 804, DC to DC converter circuitry 806, and/or DC to AC converter circuitry 808.

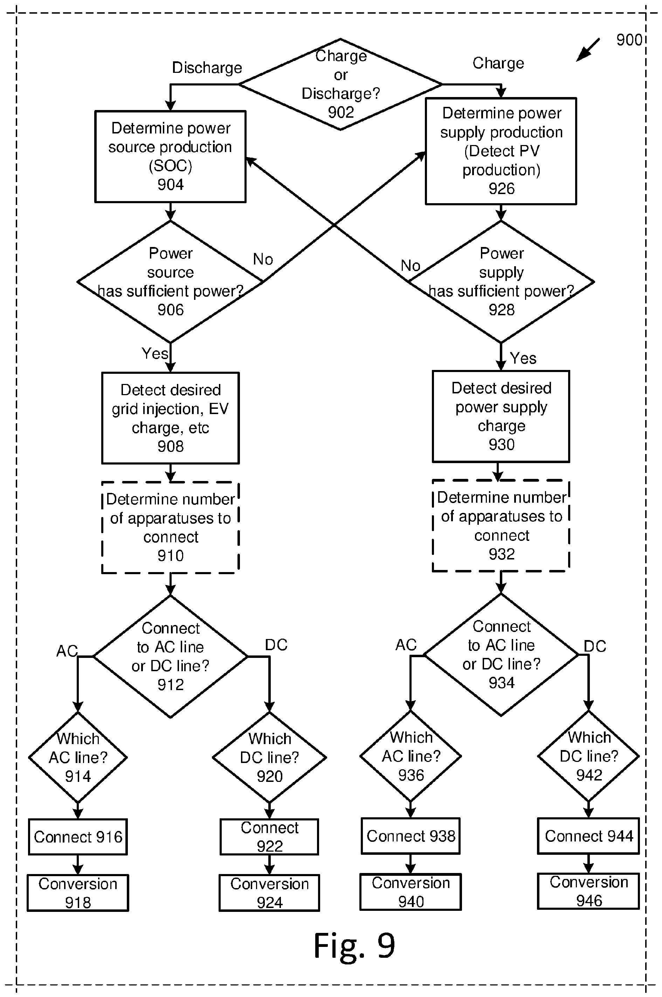

Fig. 9 shows a flowchart of an example method 900 for power conversion. Method 900 may be performed by one or more power conversion devices 100. Method 900 may be performed by control circuitry 310. Control circuitry 310 may be distributed among a plurality of power conversion devices 100 and/or may include central control circuitry configured to control one or more power conversion devices 100.

In step 902, control circuitry 310 may determine whether a power conversion device 100 may work in a discharge mode of operation (i.e., provide power) or a charge mode of operation (i.e., receive power). Based on a determination that power conversion device 100 is to work in a discharge mode of operation, method 900 may proceed to step 904. Based on a determination that power conversion device 100 is to work in a charge mode of operation, method 900 may proceed to step 926.

In step 904, control circuitry 310 may determine power source production. Control circuitry 310, for example, may determine a state of charge (SOC) of a power source (e.g., a battery), and/or power production of a generator (e.g., PV source, wind source, fuel cell, etc.). One or more sensors may be configured to provide data related to the power production of the power source to the control circuitry 310.

In step 906, control circuitry 310 may determine if the power source has sufficient power to operate in discharge mode. This determination may be based on one or more thresholds. Based on a determination that the power source has sufficient power to operate in discharge mode, method 900 may proceed to step 908. Based on a determination that power source does not have sufficient power to operate in discharge mode, method 900 may proceed to step 926.

In step 908, control circuitry 310 may detect a desired grid injection. The control circuitry may determine, for example, types of loads and/or how many loads the power conversion device may provide power to (e.g., DC loads, AC loads, EV charge, battery charge, etc.). The number of loads and/or types of loads may be determined based on state of charge of one or more loads and/or a state of charge of available power sources that are able to be connected to those one or more loads. One or more sensors may be configured to provide data related to the state of charge of the loads to the control circuitry 310.

In step 910, control circuitry 310 may determine a number of power conversion devices to connect to the one or more loads. This determination may be based on power produced by the power source, state of charge of power source, state of charge of load or available power sources, power produced by other power sources, state of charge of other power sources, etc.

In step 912, control circuitry 310 may determine which bus lines to connect to the power conversion device 100. This determination may be based on the determined one or more loads. Power conversion device 100, in some examples, may connect to a plurality of power buses (e.g., one or more AC buses and one or more DC buses).

Based on the determination in step 912, the method may proceed to step 914, step 920, or both step 914 and step 920 at relatively the same time (e.g., relatively simultaneously). In step 914, control circuitry 310 may determine which one or more AC buses to connect to. In step 920, control circuitry 310 may determine which one or more DC buses to connect to.

In step 916, control circuitry 310 may connect to the one or more AC lines (e.g., by operating one or more switches of the one or more switching circuitries 104). In step 918, control circuitry 310 may control power conversion (e.g., by operating one or more switches of the one or more converter circuitries 102). The power conversion may include DC to AC, AC to AC, AC to DC, DC to DC, etc.

In step 922, control circuitry 310 may connect to the one or more DC lines (e.g., by operating one or more switches of the one or more switching circuitries 104). In step 924, control circuitry 310 may control power conversion (e.g., by operating one or more switches of the one or more converter circuitries 102). The power conversion may include DC to AC, AC to AC, AC to DC, DC to DC, etc.

In step 926, control circuitry 310 may determine power supply production. Control circuitry 310, for example may determine availability of an electrical grid, a state of charge (SOC) of a power supply (e.g., a battery), power production of a generator (e.g., PV source, wind source, fuel cell, etc.). One or more sensors may be configured to provide data related to the power production of the power supply to the control circuitry 310.

In step 928, control circuitry 310 may determine if the power supply has sufficient power for the power source to operate in charge mode. This determination may be based on one or more thresholds. Based on a determination that the power supply has sufficient power for the power source to operate in charge mode, method 900 may proceed to step 930. Based on a determination that power supply does not have sufficient power for power source to operate in charge mode, method 900 may proceed to step 904.

In step 930, control circuitry 310 may detect a desired power supply charge. For example, the control circuitry may determine which types of power supplies are connected and/or how many supplies may provide power to the power conversion device (e.g., DC power supplies, AC power supplies, EV power supplies, battery power supplies, generator power supplies, etc.). The number of power supplies and/or types of power supplies may be determined based on state of charge of one or more power supplies and/or a state of charge of available power sources that are able to be connected to those one or more power supplies. One or more sensors may be configured to provide data related to the state of charge of the power sources to the control circuitry 310.

In step 932, control circuitry 310 may determine a number of power conversion devices to connect to the one or more power supplies. This determination may be based on a power produced by the one or more power supplies, a state of charge of the one or more power sources, a state of charge of available power sources that may be used as power supplies, a power produced by other power sources that may be used as power supplies, etc.

In step 934, control circuitry 310 may determine which bus lines to connect to the power conversion device 100. This determination may be based on the determined one or more power supplies. A power conversion device 100, in some examples, may connect to a plurality of power buses (e.g., one or more AC buses and one or more DC buses).

Based on the determination in step 934, the method may proceed to step 936, step 942, or both step 936 and step 942 at relatively the same time (e.g., relatively simultaneously). In step 936, control circuitry 310 may determine which one or more AC buses to connect to. In step 942, control circuitry 310 may determine which one or more DC buses to connect to.

In step 938, control circuitry 310 may connect to the one or more AC lines (e.g., by operating one or more switches of the one or more switching circuitries 104). In step 940, control circuitry 310 may control power conversion (e.g., by operating one or more switches of the one or more converter circuitries 102). The power conversion may include DC to AC, AC to AC, AC to DC, DC to DC, etc.

In step 944, control circuitry 310 may connect to the one or more DC lines (e.g., by operating one or more switches of the one or more switching circuitries 104). In step 946, control circuitry 310 may control power conversion (e.g., by operating one or more switches of the one or more converter circuitries 102). The power conversion may include DC to AC, AC to AC, AC to DC, DC to DC, etc.

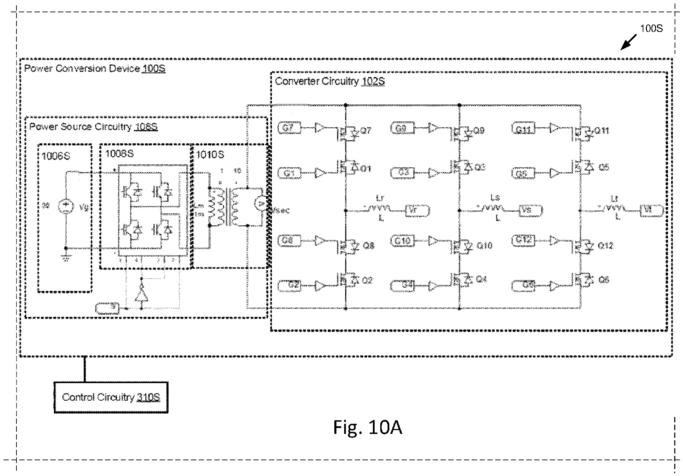

Reference is now made to Fig. 10A, which shows a power conversion device 100S.

Power conversion device 100S may include converter circuitry 102S and power source circuitry 108S. Power conversion device 100S may include switching circuitry. Switching circuitry 104 may be connected to converter circuitry 102S as shown and described herein. Switching circuitry 104 may be internal or external to a housing 106S of power conversion device 100S. Control circuitry 310S may be internal or external to a housing 106S of power conversion device 100S.

Converter circuitry 102S may include a plurality of power conversion circuitries. For example, the plurality of power conversion circuitries may include: DC to DC conversion circuitry, DC to AC conversion circuitry, AC to DC conversion circuitry, AC to AC conversion circuitry, etc.

Converter circuitry 102S may include cycloconverter circuitry configured to convert AC to AC. The cycloconverter circuitry may be configured as a frequency changer that converts AC power of a specific frequency and voltage to a different frequency and voltage of AC power without any intermediate DC link. The cycloconverter circuitry 102S may be operated to produce power that is DC power (for example, by producing pulsed DC voltage /current output). For example, the cycloconverter circuitry may be configured to generate a DC output that is a waveform with a relatively constant amplitude value that maintains a constant overall polarity direction, e.g., totally positive or totally negative. The produced waveform may be relatively equivalent to a pure DC output that has a substantially constant value.

Converter circuitry 102S may include one or more terminals configured to connect to power source circuitry 108S and one or more terminals configured to connect to one or more loads or power sources internal or external to power conversion device 100S. Converter circuitry 102S may include one or more terminals configured to connect to switching circuitry 104. Converter circuitry 102S may include one or more terminals configured to connect to one or more loads or power sources internal or external to power conversion device 100S via switching circuitry 104. For example, one or more terminals Vr, Vs, Vt may connect to circuitry, loads, power sources, power buses (AC or DC), etc. Converter circuitry 102S may be configured to produce 3-phase AC power (e.g., Vr, Vs, Vt may each provide a different phase). As another example, converter circuitry 102S may be configured to produce AC power on two terminals and DC power on one or more other terminals (for example, Vr and Vs may be AC terminals at the same or different phases and Vt may be a DC terminal). The terminals may be galvanically isolated from one another. Galvanic isolation may help deal with noise issues. One or more terminals Vr, Vs, Vt may connect to switching circuitry 104. One or more terminals Vr, Vs, Vt may connect to loads, power sources, power buses (AC or DC), etc., via switching circuitry 104.

Converter circuitry may include a plurality of switches Q that are connected in pairs that are series corrected to each other "face to face" or "back to back" (e.g., source to source, drain to drain, emitter to emitter, collector to collector, etc.). The switches Q may include integral diodes or may be connected to parallel diodes.

Converter circuitry 102S may be bidirectional converter circuitry. Converter circuitry 102S may be configured to receive power from power source circuitry 108S. For example, converter circuitry 102S may be configured to receive AC power from power source circuitry 108S. Converter circuitry 102S may be configured to provide power to power source circuitry 108S. For example, power source circuitry 108S may include a rechargeable battery or other power storage.

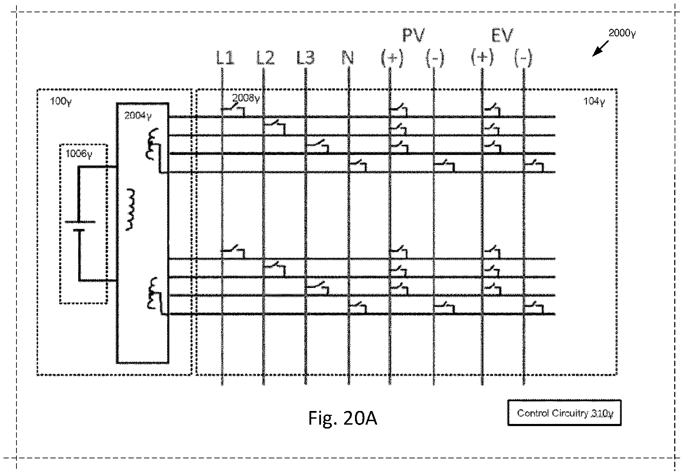

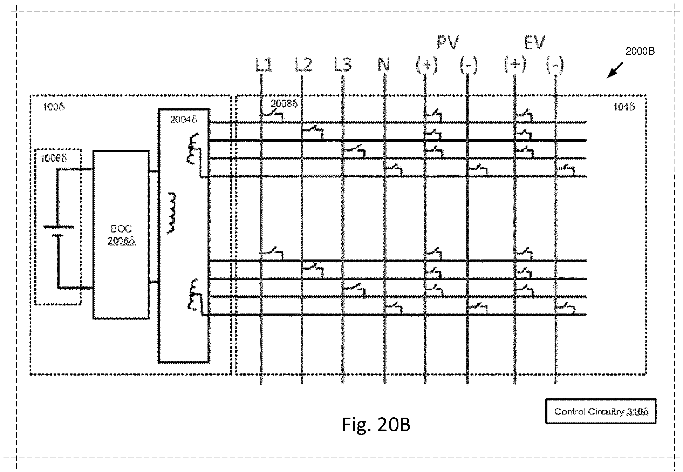

Converter circuitry 102S may include a plurality of terminals configured to connect to switching circuitry 104 (for example, as shown in Fig. 20A and Fig. 20B). For example, converter circuitry 102S may have three terminals Vr, Vs, Vt configured to connect to switching circuitry 104 (this number of terminals is an example, and there may be more or less terminals).

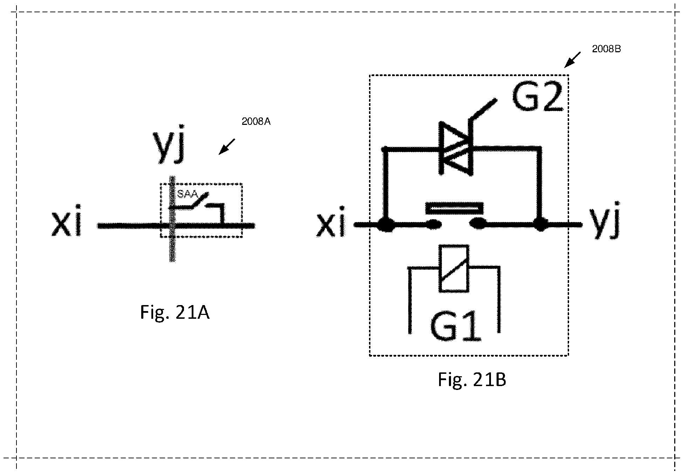

Switching circuitry 104 may be configured to connect between converter circuitry 102S and a plurality of power buses. Switching circuitry 104 may include a plurality of switches and/or switching arrangements. Each switching arrangement 2008 (for example, as shown in Fig. 20A and Fig. 20B) may include one or more switches S (for example, as shown in Fig. 21A and Fig. 21B). Each of the plurality of switching arrangements 2008 may include a first terminal configured to connect to a respective terminal of converter circuitry 102S. Each of the plurality of switching arrangements 2008 may include a second terminal that may be configured to connect to a respective power bus line. For example, the power bus line may be a first DC bus line, second DC bus line, first AC bus line, second AC bus line, etc. Switching circuitry 104 may be internal or external to a housing 106S of power conversion device 100S.

Power source circuitry 108S may include power source 1006S, second converter circuitry 1008S, and third converter circuitry 1010S.

Power source 1006S may be a bidirectional rechargeable power source that may either provide power as a power supply or receive power as a load. For example, the power source may be a battery. The power source may be or include power generation circuitry such as a generator, photovoltaic (PV) power generator, wind power generator, fuel cell power generator, etc. Each power source may include a plurality of power sources (for example, a plurality of batteries, a plurality of PV generators, a battery and a PV generator, or a combination thereof). The battery may be part of an electric vehicle (EV). The plurality of power sources may be connected in series, parallel, or a combination of the two. Switches may be configured to control when one or more of the power sources are connected to the converter circuitry.

Second converter circuitry 1008S and third converter circuitry 1010S may include a plurality of power conversion circuitries. For example, the plurality of power conversion circuitries may include: DC to DC conversion circuitry, DC to AC conversion circuitry, AC to DC conversion circuitry, AC to AC conversion circuitry, etc.

Second converter circuitry 1008S may include bidirectional inverter circuitry configured to convert DC to AC or AC to DC. For example, second converter circuitry 1008S may include full bridge inverter circuitry. For example, second converter circuitry 1008S may include high frequency inverter circuitry.

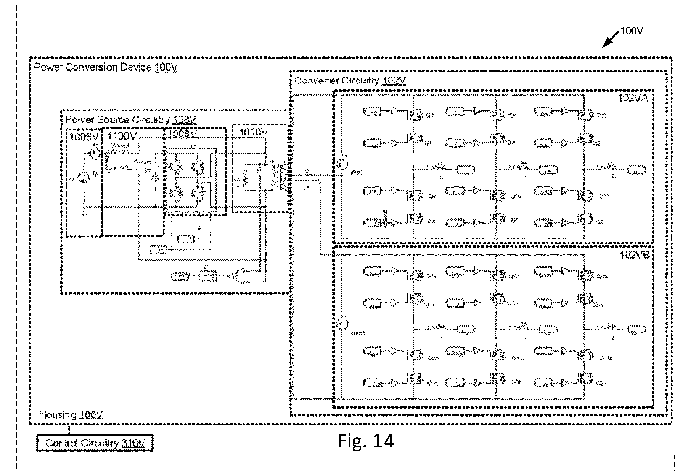

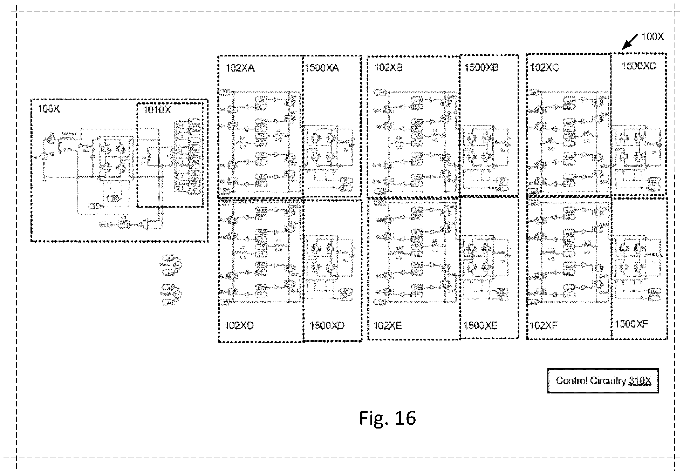

Second converter circuitry 1008S may include conversion circuitry that has a conversion switching frequency. Converter circuitry 102S may include one or more conversion circuitries, and each conversion circuitry may have its own conversion switching frequency. The conversion switching frequency for each conversion circuitry may be the same conversion switching frequency. For example, the switching frequency of second converter circuitry 1008S may be in the range of about 10s of kHzs, e.g., about 10hKz - about 90 kHz. For example, the switching frequency of second converter circuitry 1008S may be in the range of about 100s of kHzs, e.g., about 100hKz - about 900 kHz. The number of terminals or conversion circuitries of converter circuitry 102S may determine the conversion switching frequency of second converter circuitry 1008S. The conversion frequency of converter circuitry 1008S may be (1/N)*(the conversion switching frequency of the converter circuitries 102S), or (1/N)*(the conversion switching frequency of the converter circuitries 102), where N is the number of terminals or the number of conversion circuitries of converter circuitry 102S. For example, if second converter circuitry 1008S includes inverter circuitry (e.g., full bridge or half bridge) and converter circuitry 102S includes three inverter circuitries (e.g., full bridge or half bridge, for example, including switches Q1-Q12) with a switching frequency of about 120 kHz each, and three terminals Vr,Vs,Vt, the conversion frequency of converter circuitry 1008S may be (1/3) *(120kHz) = about 40 kHz. As another example, referring to Fig. 14, if second converter circuitry 1008V includes inverter circuitry (e.g., full bridge or half bridge) and converter circuitry 102V includes six inverter circuitries (e.g., full bridge or half bridge, for example, including switches Q1-Q12 and switches Q1a-Q12a) with a switching frequency of about 120 kHz each, and six terminals Vr,Vs,Vt,Vu,Vv,Vw the conversion frequency of converter circuitry 1008S may be (1/6) *(120kHz) = about 20 kHz. As another example, referring to Fig. 16, if second converter circuitry 1008X includes inverter circuitry (e.g., full bridge or half bridge) and converter circuitry 102X includes twelve inverter circuitries (e.g., full bridge or half bridge, for example, including switches Q1-Q48) with a switching frequency of about 120 kHz each, and twelve terminals V1-V12 the conversion frequency of converter circuitry 1008X may be (1/12) *(120kHz) = about 10 kHz. Each conversion circuitry of the converter circuitry 102 may have its own phase. The phases for each conversion circuitry may be different to help produce a DC waveform with no ripple or substantially no ripple. For example, when the conversion frequency of converter circuitry 1008 is (1/N)*(the conversion switching frequency of the converter circuitries 102) and the converter circuitries 102 each have a different phase there may be about zero ripple.

Referring back to Fig. 10A, third converter circuitry 1010S may include bidirectional converter circuitry configured to convert AC to AC. For example, third converter circuitry 1010S may be configured to step up or step down AC power. For example, third converter circuitry 1010S may include transformer circuitry. For example, the transformer circuitry may be high frequency transformer circuitry.

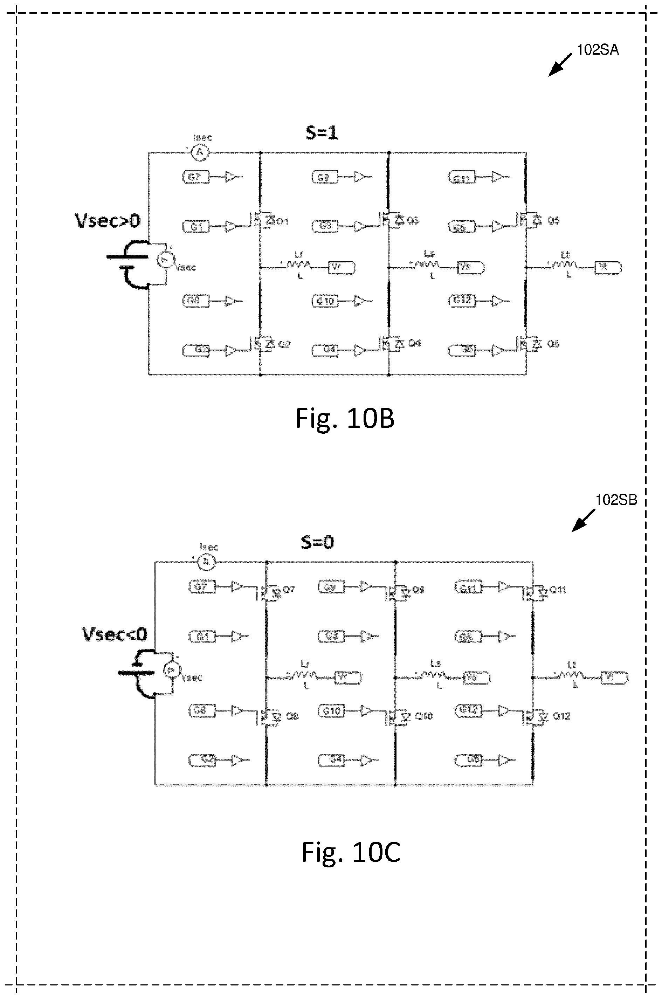

Reference is now made to Figs. 10B and 10C, which show examples 102SA and 102SB, respectively, of operation of power conversion device 100S.

In Fig. 10B, switches Q1-Q6 are controlled (e.g., in a switched mode of operation) and switches Q7-Q12 are in a "short circuit" mode of operation (e.g., maintained in an ON state or an OFF state to create a direct electrical pathway). In Fig. 10C, switches Q7-Q12 are controlled (e.g., in a switched mode of operation) and switches Q1-Q6 are in a "short circuit" mode of operation (e.g., maintained in an ON state or an OFF state to create a direct electrical pathway).

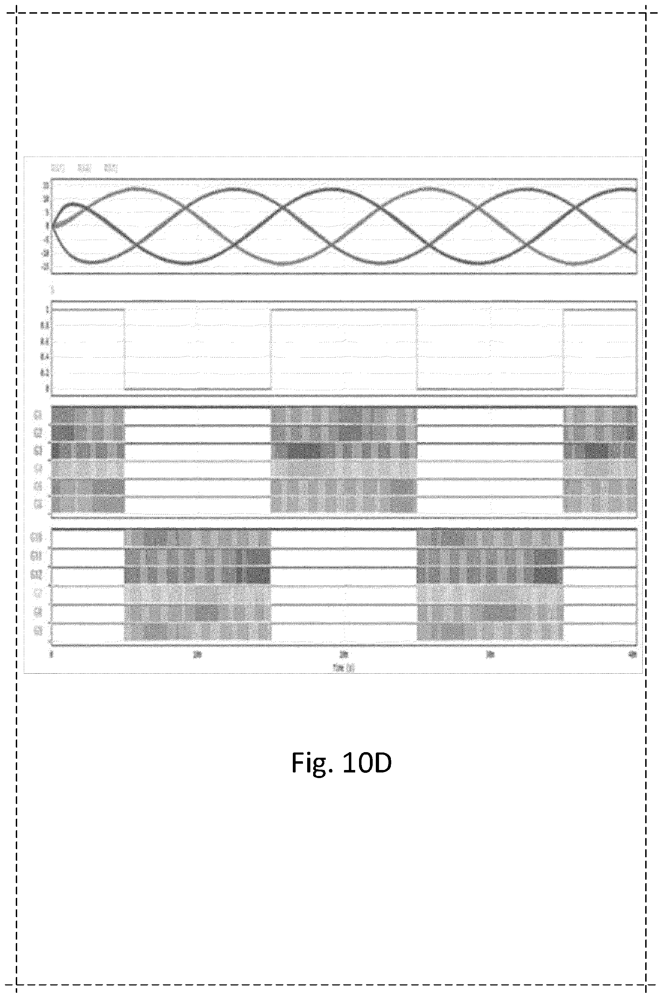

Reference is now made to Fig. 10D, which show examples of graphs related to operation of power conversion device 100S.

The first graph at the top is an example of 3-phase AC current produced by converter circuitry 102S. The second graph is an example of a control signal which may be configured to control a first plurality (e.g., half) of the switches of converter circuitry 102S to operate in a switched mode of operation and a second plurality (e.g., half) of the switches of converter circuitry 102S to operate in a "short circuit" mode of operation in a first time period. The control signal may be configured to control the first plurality (e.g., half) of the switches of converter circuitry 102S to operate in a "short circuit" mode of operation and the second plurality (e.g., half) of the switches of converter circuitry 102S to operate in a switched mode of operation in a second time period. The third graph is an example of the states of a first plurality (e.g., half, for example Q1-Q6) of the switches of converter circuitry 102S which operate in a switched mode of operation in a first time period and a "short circuit" mode of operation in a second time period. The fourth graph at the bottom is an example of the states of a second plurality (e.g., half, for example Q7 - Q12) of the switches of converter circuitry 102S which operate in a "short circuit" mode of operation in a first time period and a switched mode of operation in a second time period.

Converter circuitry 102S may be controlled to operate the plurality of switches at a certain duty cycle. For example, the plurality of switches may be controlled to operate at (but not limited to) a 50% duty cycle. For example, one side (e.g., a primary side) of the transformer (e.g., connected to the Power source circuitry 108S) may be provided with a 50% duty cycle square wave. The secondary voltage may also be a square wave with a relatively greater amplitude (e.g., based on the power source voltage and the number of turns in the transformer). Operating half of the switches of converter circuitry 102S for each half cycle (e.g., for two different time periods) may help provide a zero average voltage (e.g., at the primary side of the transformer).

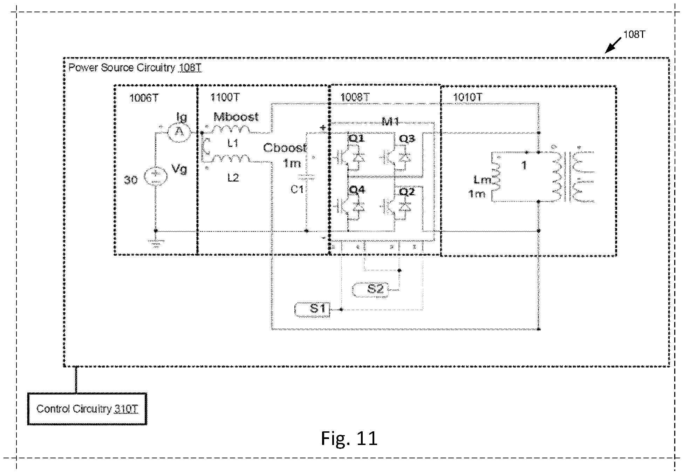

Reference is now made to Fig. 11, which shows power source circuitry 108T.

Power source circuitry 108T may be similar to other power source circuitry 108 shown and described herein. Power source circuitry 108T may be connected to converter circuitry 102. Control circuitry 310T may be internal or external to a housing of power source circuitry 108T, or a housing of a power conversion device 100 including the power source circuitry 108T.

Power source circuitry 108T may include fourth converter circuitry 1100T.

Fourth converter circuitry 1100T may include bidirectional inverter circuitry configured to convert DC to DC. For example, fourth converter circuitry 1100T may include boost circuitry. For example, fourth converter circuitry 1100T may include one or more inductors and one or more capacitors. For example, fourth converter circuitry 1100T may include a pair of inductors L1, L2. For example, the pair of inductors L1, L2 may be split inductors. For example, the pair of inductors L1, L2 may be a 2-limbs coupled inductor (e.g., a reverse couple inductor). For example, the pair of inductors may be connected to the third converter circuitry 1010T. For example, the pair of inductors may be connected to different terminals of an inductor of transformer circuitry of the third converter circuitry 1010T. For example, the pair of inductors may be connected to the second converter circuitry 1008T. For example, the pair of inductors may be connected to different terminals of inverter circuitry of the second converter circuitry 110B. For example, a first inductor terminal of fourth converter circuitry 1100T may be connected to both a terminal of second converter circuitry 1008T (e.g., a first inverter terminal) and a terminal of third converter circuitry 1010T (e.g., a first transformer terminal). A second inductor terminal of fourth converter circuitry 1100T may be connected to both a terminal of second converter circuitry 1008T (e.g., a second inverter terminal) and a terminal of third converter circuitry 1010T (e.g., a second transformer terminal). For example, the pair of inductors may provide zero or about zero ripple. Fourth converter circuitry 1100T may include a capacitor. For example, the capacitor may be connected to the second converter circuitry 1008T. For example, the capacitor C1 may be connected across two different terminals of inverter circuitry of the second converter circuitry 1008T.

Power source 1006T may be a relatively low voltage power source (e.g., in a range of about 1 volt to about 20 volts, a range of about 5 volts to about 10 volts, etc.). Fourth converter circuitry 1100T may be configured to boost the voltage of power source 1006T when power source 1006T operates as a power supply to a relatively greater voltage that may be provided to second converter circuitry 1008T and/or third converter circuitry 1010T. For example, fourth converter circuitry 1100T may be configured to boost the voltage of power source 100TB to tens of volts, or hundreds of volts (e.g., in a range of about 30 volts to about 600 volts, a range of about 50 volts to about 500 volts, etc.). Fourth converter circuitry 1100T may be configured to buck the voltage of power source 1006T when power source 1006T operates as a load (e.g., a battery charging mode) to a relatively lower voltage that may be provided to the power source 1006T.

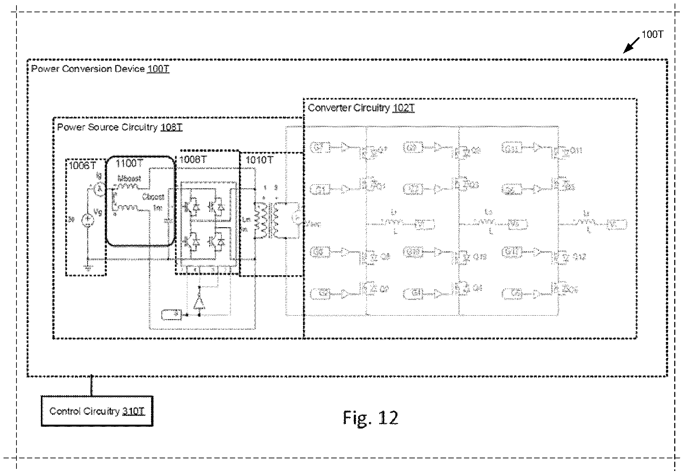

Reference is now made to Fig. 12, which shows a power conversion device 100T.

Power conversion device 100T may be similar to other power conversion devices 100 shown and described herein. Control circuitry 310T may be internal or external to a housing 106T of power conversion device 100T. Switching circuitry 104 may be connected to converter circuitry 102T. Switching circuitry 104 may be internal or external to a housing 106T of power conversion device 100T.

Power conversion device 100T may include power source circuitry 108T and converter circuitry 102T. Power source circuitry 108T may include fourth converter circuitry 1100T.

Power conversion device 100T may be controlled with a 50% duty cycle signal (e.g., to provide a zero average voltage at a side of the transformer, for example, the primary side).

Fourth converter circuitry 1100T may be configured to help produce pure (or substantially pure) DC current. For example, fourth converter circuitry 1100T may help produce a DC waveform with no ripple or substantially no ripple.

Converter circuitry 102T may include one or more terminals configured to connect to power source circuitry 108T and one or more terminals configured to connect to one or more loads or power sources internal or external to power conversion device 100T. For example, one or more terminals Vr, Vs, Vt may connect to circuitry, loads, power sources, power buses (AC or DC), etc. Converter circuitry 102T may be configured to produce 3-phase AC power (e.g., Vr, Vs, Vt may each provide a different phase). As another example, converter circuitry 102T may be configured to produce AC power on two terminals and DC power, or equivalent DC power on one or more other terminals (for example, Vr and Vs may be AC terminals at the same or different phases and Vt may be a DC terminal). The terminals may be galvanically isolated from one another. Galvanic isolation may help deal with noise issues.

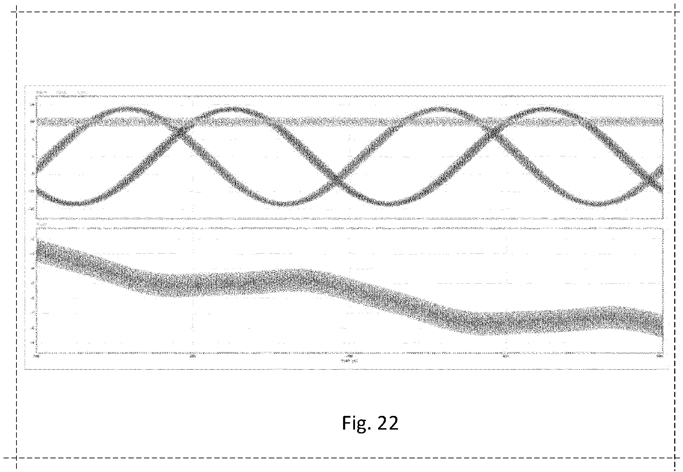

An example of AC power being produced at two terminals, and DC power being produced at a third terminal is shown in the top graph of Fig. 22. For example, DC current produced at the terminal may be a waveform with a constant amplitude value or substantially constant amplitude value.

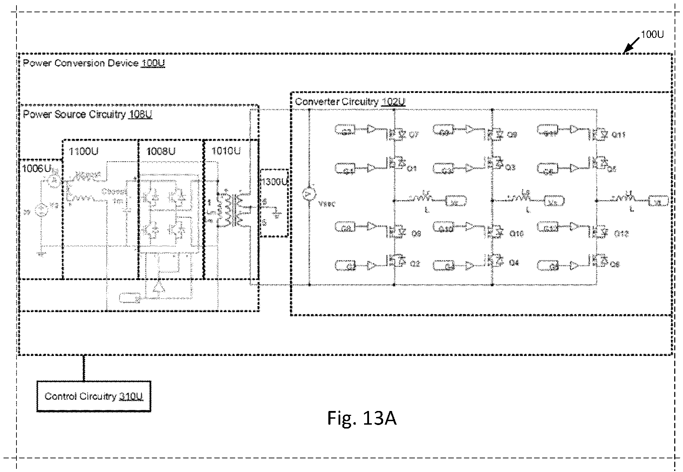

Reference is now made to Fig. 13A, which shows a power conversion device 100U.

Power conversion device 100U may be similar to other power conversion devices 100 shown and described herein. Control circuitry 310U may be internal or external to a housing 106U of power conversion device 100U. Switching circuitry 104 may be connected to converter circuitry 102U. Switching circuitry 104 may be internal or external to a housing 106U of power conversion device 100U.

Power source circuitry 104U may include fourth converter circuitry 1100U.

Power source circuitry 104U may include a splitting connection 1300U. Splitting connection 1300U may be connected to an inductor of the transformer circuitry of the third converter circuitry 1010U. For example, splitting connection 1300U may be connected to the inductor that has terminals connected to converter circuitry 102U. Splitting connection 1300U may be configured to split the inductor into a plurality of smaller windings. Splitting connection 1300U may be connected to a midpoint of the inductor (e.g., between two different windings of the inductor or between two smaller inductors). Connecting the splitting connection 1300U to the midpoint may split the inductor into about half. Splitting the inductor to about half may lower the number of windings. For example, without splitting, a number of windings may be about 10. For example, with splitting, the number of windings may be about 5 windings (e.g., for each smaller inductor / for each of the split windings). A lower number of windings may provide a closer ratio (1:N) between the inductors of the transformer. For example, a ratio between a first inductor (primary or secondary) and a second inductor (primary or secondary) may be about 1 to about 5 (e.g., 1:5, instead of about 1 to about 10. 1:10, without splitting). Having a ratio that is closer to about 1 to about 1 (1:1) may provide a conversion that is relatively smoother and relatively easier for the transformer to perform. Splitting connection 1300U may include a connection from a point or terminal of an inductor to a ground potential, or virtual ground potential. There may be a plurality of splitting connections 1300U that may split the inductor into more than two different windings / smaller inductors.

Splitting connection 1300U may be a center tap to the transformer circuitry. Splitting connection 1300U may be a return wire (e.g., a neutral phase N for a 3-phase AC load). Splitting connection 1300U may help enable a non-symmetric and/or unbalanced load. Splitting circuitry 1300U may help improve the produced DC voltage at one or more terminals of the converter circuitry 102. For example, the splitting circuitry 1300U may help produce a DC output waveform that is closer to a pure DC output.

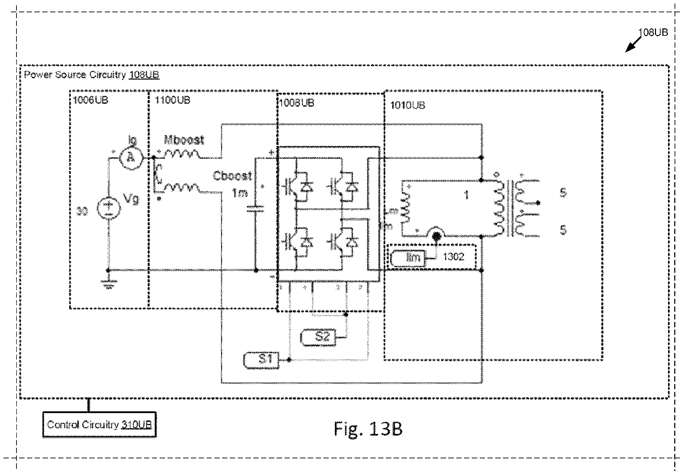

Reference is now made to Fig. 13B, which shows a power source circuitry 108UB.

Power source circuitry 108UB may be similar to other power source circuitry 108 shown and described herein. Power source circuitry 108UB may be connected to converter circuitry 102. Control circuitry 310UB may be internal or external to a housing of power source circuitry 108UB, or a housing of a power conversion device 100 including the power source circuitry 108UB.

Third converter circuitry 1010UB may include feedback circuitry 1302.

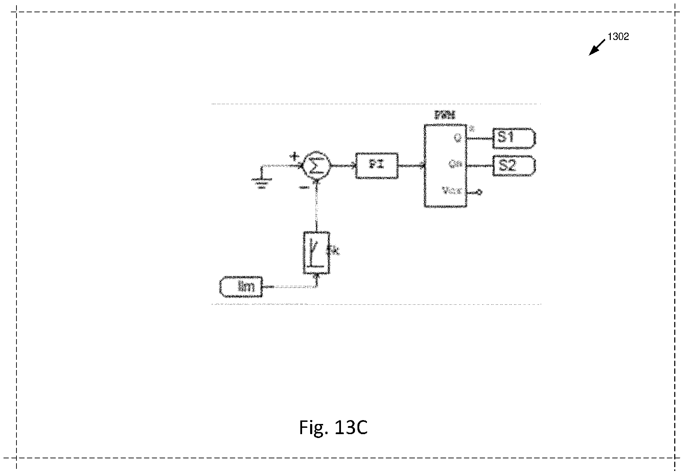

An example of feedback circuitry is shown in Fig. 13C. Feedback circuitry 1302 may include Proportional Integral (PI) control circuitry or Proportional Integral Derivative (PID) control circuitry. Feedback circuitry may include Pulse Width Modulation (PWM) circuitry. Feedback circuitry may include summation circuitry. The summation circuitry may be connected to ground potential or virtual ground potential.

The feedback circuitry 1302 may help improve the produced DC voltage at one or more terminals of the converter circuitry 102. For example, the feedback circuitry 1302 may help produce a DC output waveform that is closer to a pure DC output.

Reference is now made to Fig. 14, which shows a power conversion device 100V.

Power conversion device 100V may be similar to other power conversion devices 100 shown and described herein. Control circuitry 310V may be internal or external to a housing 106V of power conversion device 100V. Switching circuitry 104 may be connected to converter circuitry 102V. Switching circuitry 104 may be internal or external to a housing 106V of power conversion device 100V.

Converter circuitry 102V may include a plurality of converter circuitries 102. For example, converter circuitry 102V may include converter circuitry 102VA and converter circuitry 102VB. This number of converter circuitries 102VA, 102VB is an example, and there may be more or less converter circuitries 102. Third converter circuitry 1010V may include a plurality of terminals to connect to the plurality of converter circuitries 102. For example, a first plurality of terminals may be the terminals of a first inductor and a second plurality of terminals may be the terminals of a second inductor. The first and second inductors may have the same or a different number of windings. As another example, a first plurality of terminals may be the terminals of a first winding of a split inductor and a second plurality of terminals may be the terminals of a second winding of the split inductor. The first and second windings may have the same or a different number of windings. Converter circuitry 102VA may be connected to the first terminals and converter circuitry 102VB may be connected to the second terminals.

Converter circuitry 102VA may include one or more terminals configured to connect to power source circuitry 108V and one or more terminals configured to connect to one or more loads or power sources internal or external to power conversion device 100V. For example, one or more terminals Vr, Vs, Vt may connect to circuitry, loads, power sources, power buses (AC or DC), etc. Converter circuitry 102VA may be configured to produce 3-phase AC power (e.g., Vr, Vs, Vt may each provide a different phase). As another example, converter circuitry 102VA may be configured to produce AC power on two terminals and DC power on one or more other terminals (for example, Vr and Vs may be AC terminals at the same or different phases and Vt may be a DC terminal).

Converter circuitry 102VA may include a plurality of terminals Vr, Vs, Vt configured to connect to switching circuitry 104 (for example, as shown in Fig. 20A and Fig. 20B). This number of terminals is an example, and there may be more or less terminals.

Converter circuitry 102VB may include one or more terminals configured to connect to power source circuitry 108V and one or more terminals configured to connect to one or more loads or power sources internal or external to power conversion device 100V. For example, one or more terminals Vu, Vv, Vw may connect to circuitry, loads, power sources, power buses (AC or DC), etc. Converter circuitry 102VB may be configured to produce 3-phase AC power (e.g., Vu, Vv, Vw may each provide a different phase). As another example, converter circuitry 102EB may be configured to produce AC power on two terminals and DC power on one or more other terminals (for example, Vu and Vv may be AC terminals at the same or different phases and Vw may be a DC terminal).

Converter circuitry 102VB may include a plurality of terminals Vu, Vv, Vw configured to connect to switching circuitry 104 (for examples, as shown in Fig. 20A and Fig. 20B). This number of terminals is an example, and there may be more or less terminals.

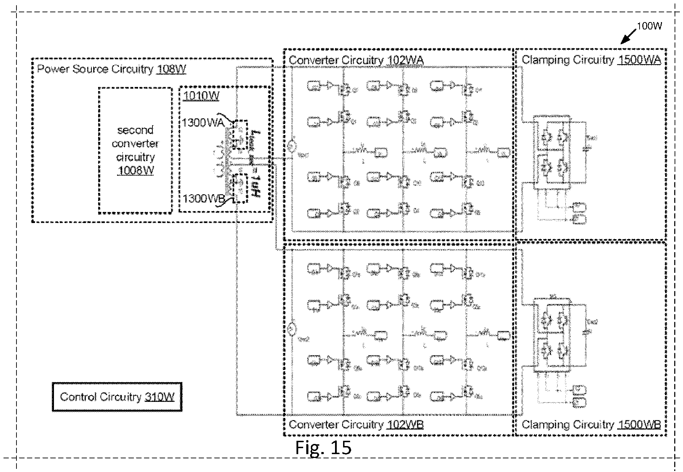

Reference is now made to Fig. 15, which shows a power conversion device 100W.

Power conversion device 100W may be similar to other power conversion devices 100 shown and described herein. Control circuitry 310W may be internal or external to a housing of power conversion device 100W. Switching circuitry 104 may be connected to converter circuitry 102W. Switching circuitry 104 may be internal or external to a housing of power conversion device 100W.

Power source circuitry 108W may include a plurality of splitting connections 1300WA, 1300WB. Each splitting connection 1300W may be connected to an inductor of the transformer circuitry of the third converter circuitry 1010W. The inductor connected to the second converter circuitry 1008W may also be a split inductor or a plurality of inductors. The second converter circuitry 1008W may be similar to other second converter circuitries 1008. The power source circuitry 108W may include one or more power sources 1006.

Converter circuitry 102W may include a plurality of converter circuitries 102. For example, converter circuitry 102W may include converter circuitry 102WA and converter circuitry 102WB. This number of converter circuitries 102WA, 102WB is an example, and there may be more or less converter circuitries 102. Third converter circuitry 1010W may include a plurality of terminals to connect to the plurality of converter circuitries 102. For example, a first plurality of terminals may be the terminals of a first inductor and a second plurality of terminals may be the terminals of a second inductor. The first and second inductors may have the same or a different number of windings. As another example, a first plurality of terminals may be the terminals of a first winding of a split inductor and a second plurality of terminals may be the terminals of a second winding of the split inductor. The first and second windings may have the same or a different number of windings. Converter circuitry 102WA may be connected to the first terminals and converter circuitry 102WB may be connected to the second terminals.

Power conversion device 100W may include a plurality of clamping circuitries 1500. Clamping circuitry 1500 may include converter circuitry (e.g., full bridge converter circuitry, for example, including a plurality of switches and a capacitor). For example, power conversion device 100W may include a first clamping circuitry 1500WA and a second clamping circuitry 1500WB. First clamping circuitry 1500WA may be connected to converter circuitry 102WA. Second clamping circuitry 1500WB may be connected to converter circuitry 102WB. Clamping circuitry 1500 may limit the voltage and/or current of converter circuitry 102 (e.g., to within one or more threshold voltages and/or currents, for example, within a range of voltages and/or currents). Each clamping circuitry 1500 may be configured to limit the converter circuitry 102W to the same or different values or ranges of values. For example, first clamping circuitry 1500WA may be configured to limit converter circuitry 102WA to a first range of voltages and second clamping circuitry 1500WB may be configured to limit converter circuitry 102WB to a second range of voltages (which may be the same as or different than the first range of voltages). As another example, first clamping circuitry 1500WA may be configured to limit converter circuitry 102WA to a first range of currents and second clamping circuitry 1500WB may be configured to limit converter circuitry 102WB to a second range of currents (which may be the same as or different than the first range of currents).

Clamping circuitry 1500 may help with leakage inductance of the transformer circuitry and stray inductances, and help prevent spikes on a side (e.g., one or more secondaries) of the transformer. For example, in cases where one or more secondaries are floating, the leakage energy may have no way to go and may cause voltage spikes. The clamping circuitry 1500 may be used to limit the voltage and/or current of converter circuitry 102.

Reference is now made to Fig. 16, which shows a power conversion device 100X.

Power conversion device 100X may be similar to other power conversion devices 100 shown and described herein. Control circuitry 310X may be internal or external to a housing of power conversion device 100X. Switching circuitry 104 may be connected to converter circuitry 102X. Switching circuitry 104 may be internal or external to a housing of power conversion device 100X.

Converter circuitry 102X may include a plurality of converter circuitries 102. For example, converter circuitry 102X may include converter circuitry 102XA - 102XF (this number of converter circuitries 102X is an example, and there may be more or less converter circuitries 102). Third converter circuitry 1010X may include a plurality of terminals to connect to the plurality of converter circuitries 102. For example, six pairs of terminals for each of six inductors (or for a number of windings of one or more split inductors, e.g., 6 windings of a split inductor, 3 windings of a first split inductor and 3 windings of a second split inductor, 2 windings for each of 3 split inductors, etc.). The plurality of inductors and/or windings may have the same or a different number of windings each. Each converter circuitry 102X may be connected to a pair of terminals.

Each converter circuitry 102X may include one or more terminals configured to connect to power source circuitry 108X and one or more terminals configured to connect to one or more loads or power sources internal or external to power conversion device 100X. Converter circuitry 104X may be connected to switching circuitry 104. Each converter circuitry 102X may include one or more terminals configured to connect to one or more loads or power sources internal or external to power conversion device 100X via switching circuitry 104. For example, one or more terminals V1 - V12 may connect to circuitry, loads, power sources, power buses (AC or DC), etc. Each converter circuitry 102X may be configured to produce AC power. For example, each converter circuitry 102X may be configured to produce 1-phase AC power (e.g., on one or more terminals V), 2-phase AC power (e.g., on two different terminals V), or 3-phase AC power (e.g., if the converter circuitry includes three terminals V). As another example, converter circuitry 102X may be configured to produce DC power on one or more other terminals V.

Power conversion device 100X may include a plurality of clamping circuitries 1500. Clamping circuitry 1500 may include converter circuitry (e.g., full bridge converter circuitry, for example, including a plurality of switches and a capacitor). For example, power conversion device 100X may include clamping circuitries 1500XA - 1500XF (this number of clamping circuitries 1500X is an example, and there may be more or less clamping circuitries 1500). Each clamping circuitry 1500X may be connected to a converter circuitry 102X. Clamping circuitry 1500 may limit the voltage and/or current of converter circuitry 102X (e.g., to within one or more threshold voltages and/or currents, for example, within a range of voltages and/or currents). Each clamping circuitry 1500 may be configured to limit the converter circuitry 102X to the same or different values or ranges of values. For example, first clamping circuitry 1500XA may be configured to limit converter circuitry 102XA to a first range of voltages and second clamping circuitry 1500XB may be configured to limit converter circuitry 102XB to a second range of voltages (which may be the same as or different than the first range of voltages), etc. As another example, first clamping circuitry 1500XA may be configured to limit converter circuitry 102XA to a first range of currents and second clamping circuitry 1500XB may be configured to limit converter circuitry 102XB to a second range of currents (which may be the same as or different than the first range of currents), etc.

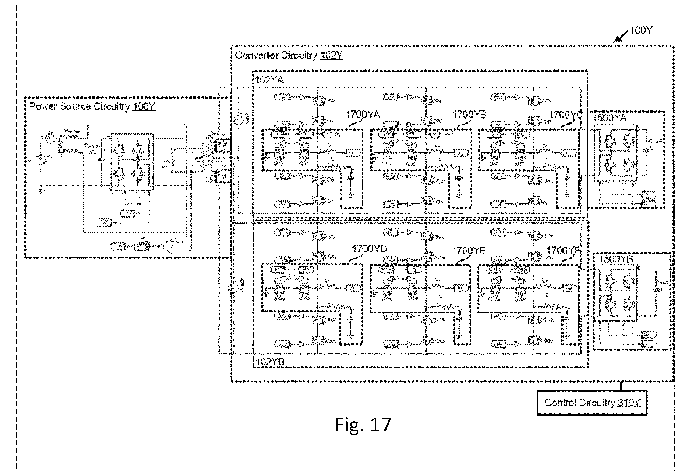

Reference is now made to Fig. 17, which shows a power conversion device 100Y.

Power conversion device 100Y may be similar to other power conversion devices 100 shown and described herein. Control circuitry 310Y may be internal or external to a housing of power conversion device 100Y.

Converter circuitry 102Y may include a plurality of converter circuitries 102. For example, converter circuitry 102Y may include converter circuitry 102YA and converter circuitry 102YB. This number of converter circuitries 102YA, 102YB is an example, and there may be more or less converter circuitries 102. Switching circuitry 104 may be connected to converter circuitry 102Y. Switching circuitry 104 may be internal or external to a housing of power conversion device 100Y.

Converter circuitry 102Y may include T-type neutral point clamped (TNPC) inverter circuitry 1700Y. In cases where converter circuitry 102 includes a single converter circuitry 102 that single converter circuitry 102 may also include TNPC converter circuitry 1700. TNPC inverter circuitry 1700 may help provide multiple levels (e.g. 3 level) for output inductors. TNPC inverter circuitry 1700 may reduce electromagnetic interference (EMI). TNPC inverter circuitry 1700 may reduce the inductance (e.g., by half) and reduce stress. TNPC inverter circuitry 1700 may include a bidirectional switch (e.g., one or more switches connected in series to one another). For example, power conversion device 100Y may include TNPC inverter circuitries 1700YA - 1700YF (this number of TNPC inverter circuitries 1700Y is an example, and there may be more or less TNPC inverter circuitries 1700). A plurality of TNPC inverter circuitries 1700Y may be included in each converter circuitry 102Y. For example, a first plurality of inverter circuitries 1700YA - 1700YC may be included in first converter circuitry 102YA, and a second plurality of inverter circuitries 1700YD - 1700YF may be included in second converter circuitry 102YB.

Power conversion device 100Y may include a plurality of clamping circuitries 1500Y. For example, power conversion device 100Y may include clamping circuitries 1500YA - 1500YB (this number of clamping circuitries 1500Y is an example, and there may be more or less clamping circuitries 1500).

Power source circuitry 108Y may include a plurality of splitting connections 1300. Each splitting connection 1300 may be connected to an inductor of the transformer circuitry of a third converter circuitry 1010. The inductor Lm connected to a second converter circuitry 1008 may also be a split inductor or a plurality of inductors.

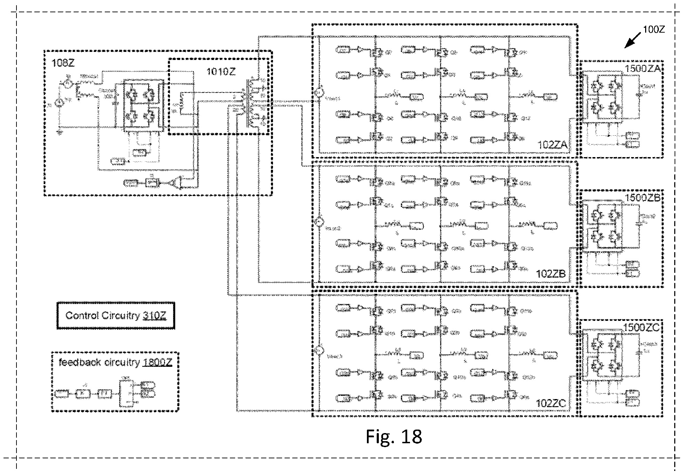

Reference is now made to Fig. 18, which shows a power conversion device 100Z.

Power conversion device 100Z may be similar to other power conversion devices 100 shown and described herein. Control circuitry 310Z may be internal or external to a housing of power conversion device 100Z. Switching circuitry 104 may be connected to converter circuitry 102Z. Switching circuitry 104 may be internal or external to a housing of power conversion device 100Z.

Converter circuitry 102Z may include a plurality of converter circuitries 102. For example, converter circuitry 102Z may include converter circuitry 102ZA - 102ZC (this number of converter circuitries 102Z is an example, and there may be more or less converter circuitries 102). One or more of the plurality of converter circuitries 102Z may be connected to an inductor on a first side of a transformer circuitry of third converter circuitry 1010Z (primary side or secondary side), and one or more of the plurality of converter circuitries 102Z may be connected to an inductor on a second side of the transformer circuitry of third converter circuitry 1010Z (primary side or secondary side). For example, converter circuitry 102Z may include converter circuitry 102ZA and converter circuitry 102ZB connected to a first side of the transformer circuitry of third converter circuitry 1010Z, and converter circuitry 102ZC connected to a second side of the transformer circuitry of third converter circuitry 1010Z.

In cases where converter circuitry 102 includes a single converter circuitry 102 that single converter circuitry 102 may also be connected to the side of transformer circuitry of third converter circuitry 1010 with one or more terminals connected to second converter circuitry 1008.

Power source circuitry 108Z may include a first plurality of terminals that are configured to connect one or more converter circuitry 102Z to a first side of the transformer circuitry of third converter circuitry 1010Z. Power source circuitry 108Z may include a second plurality of terminals that are configured to connect one or more other converter circuitry 102Z to a second side of the transformer circuitry of third converter circuitry 1010Z.

Either side of the transformer circuitry of third converter circuitry 1010Z may include a plurality of inductors and/or split inductors with a plurality of different windings.

Power conversion device 100Z may include a plurality of clamping circuitries 1500.

Power conversion device 100Z may include feedback circuitry 1800Z. Feedback circuitry 1800Z may be connected to third converter circuitry 1010Z.

Power source circuitry 108Z may include a plurality of splitting connections 1300. Each splitting connection 1300 may be connected to an inductor of the transformer circuitry of the third converter circuitry 1010Z. The inductor Lm connected to a second converter circuitry 1008 may also be a split inductor or a plurality of inductors.

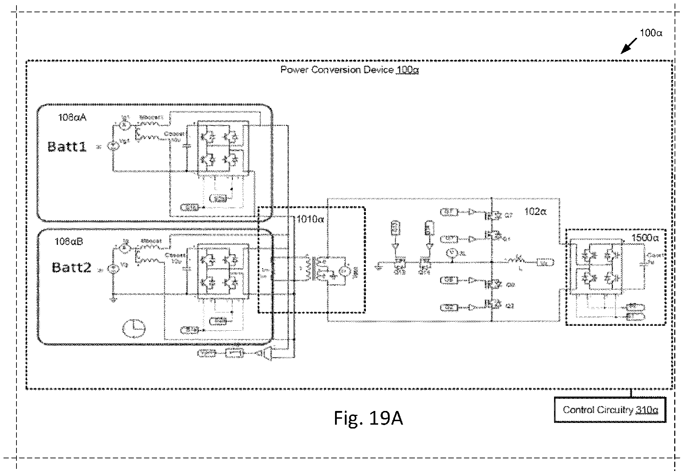

Reference is now made to Fig. 19A, which shows a power conversion device 100α.

Power conversion device 100α may be similar to other power conversion devices 100 shown and described herein. Control circuitry 310α may be internal or external to a housing of power conversion device 100α. Switching circuitry 104 may be connected to converter circuitry 102α. Switching circuitry 104 may be internal or external to a housing of power conversion device 100α.

Converter circuitry 102α may include T-type neutral point clamped (TNPC) inverter circuitry 1700.

Power conversion device 100α may include a clamping circuitry 1500α.

Power source circuitry 108α may include a plurality of power source circuitries 108α. The plurality of power source circuitries 108α may include a first power source circuitry 108αA and a second power source circuitry 108αB. This number of power source circuitries 108α is an example, and there may be more or power source circuitries 108. The plurality of power source circuitries 108α may be arranged to have a shared third converter circuitry 1010α (e.g., shared transformer circuitry). For example, first power source circuitry 108αA and second power source circuitry 108αB may both be connected to a first side of third converter circuitry 1010α (e.g., transformer circuitry) in parallel. As another example, first power source circuitry 108αA and second power source circuitry 108αB may both be connected to a first side of third converter circuitry 1010α (e.g., transformer circuitry) in series.

Third converter circuitry 1010α may include a first plurality of terminals configured to connect a first power source circuitry 108αA to a first side (e.g., primary side) of the transformer circuitry of third converter circuitry 1010α and a second plurality of terminals configured to connect a second power source circuitry 108αB to the first side of the transformer circuitry of third converter circuitry 1010α. Power source circuitry 108α may include a second plurality of terminals that are configured to connect one or more other converter circuitry 102α to a second side of the transformer circuitry of third converter circuitry 1010α.

The transformer circuitry of third converter circuitry 1010α may include a plurality of inductors and/or split inductors with a plurality of different windings.

Power source circuitry 108α may include a splitting connection 1300. For example, one or more inductor of transformer circuitry of third converter circuitry 1010α may include a splitting connection 1300.

The plurality of power source circuitries 108α may be configured to provide power to power conversion circuitry 102α at different times. Which power source circuitry 108αA, 108αB of the plurality of power source circuitries 108α provides power at a given time may depend on a State of Charge (SOC) of each power source circuitry 108αA, 108αB. A power source circuitry that is not providing power to power conversion circuitry 102α at a given time may be selectively disconnected from the power conversion circuitry 102α and/or the DC power source 1006α (e.g., using one or more switches) or bypassed (e.g., in examples of serial connections between power conversion circuitries 108α). For example, a first power source circuitry 108αA may provide power to power conversion circuitry 102α at a first time period, and a second power source circuitry 108αB may provide power to power conversion circuitry 102α at a second time period. For example, the plurality of power source circuitries 108α may time share which power source circuitry 108αA, 108αB is providing power.

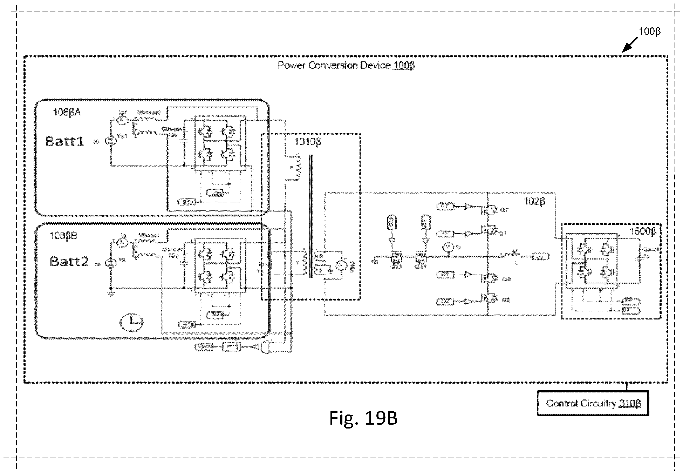

Reference is now made to Fig. 19B, which shows a power conversion device 100β.

Power conversion device 100β may be similar to other power conversion devices 100 shown and described herein. Control circuitry 310β may be internal or external to a housing of power conversion device 100β. Switching circuitry 104 may be connected to converter circuitry 102β. Switching circuitry 104 may be internal or external to a housing of power conversion device 100β. Power source circuitry 108α may include a plurality of power source circuitries 108β. The plurality of power source circuitries 108β may include a first power source circuitry 108βA and a second power source circuitry 108βB. This number of power source circuitries 108β is an example, and there may be more or less power source circuitries 108.

The transformer circuitry of third converter circuitry 1010β may include a first inductor on a first side (e.g., a primary side) and a second inductor on the first side. The first inductor may be connected to a first power source circuitry 108βA (e.g., to a second converter circuitry 1008βA of the first power source circuitry 108βA). The second inductor may be connected to a second power source circuitry 108βB (e.g., to a second converter circuitry 1008βB of the second power source circuitry 108βB).

Power conversion devices 100 may have a plurality of power source circuitries 108 and/or a plurality of converter circuitries 102. For example, in some cases a power conversion device 100 may have both a plurality of power source circuitries 108 and a plurality of converter circuitries 102.

Reference is now made to Fig. 20A, which shows a power device 2000γ.

Power device 2000γ may include power conversion device 100γ and switching circuitry 104γ.

Power conversion device 100γ may be similar to other power conversion devices 100 shown and described herein. Switching circuitry 104γ may be similar to other switching circuitry 104 shown and described herein. Control circuitry 310γ may be internal or external to a housing of power conversion device 100γ. Switching circuitry 104 may be internal or external to a housing of power conversion device 100γ.

Power conversion device 100γ may include power source 1006γ and conversion circuitry 2004γ. Conversion circuitry 2004γ may include first converter circuitry 102, second converter circuitry 1008, third converter circuitry 1010, and/or fourth converter circuitry 1100, which are shown and described herein. Power conversion device 100γ may have a plurality of power source circuitries 108 and/or a plurality of converter circuitries 102. For example, in some cases power conversion device 100γ may have both a plurality of power source circuitries 108 and a plurality of converter circuitries 102.

Switching circuitry 104γ may include a plurality of switches. Switching circuitry 104γ may include a plurality of switching arrangements 2008γ. Each switching arrangement 2008 may include one or more switches. For example, each switching arrangement 2008 may include one or more switches S shown and described above. Switching circuitry 104γ may be connected to one or more power bus (e.g., AC power bus and/or DC power bus). One or more loads and/or one or more sources may be connected to the power buses. For example, the power buses may connect to the grid, photovoltaic (PV) generators, Electric Vehicles (EV), power storage, appliances, etc.

Control circuitry 310γ may control the connections between switching circuitry 104γ and the power buses.

Control circuitry 310γ may control power conversion to, from, and between different power buses. The power conversion may be from a power source to a power bus. The power conversion may be from a power bus to a power source. The power conversion may be between a first power bus and a second power bus. For example, the power conversion may be from a DC power source to a DC bus or an AC bus. The power conversion may be from an AC power source to a DC bus or an AC bus. The power conversion may be from a DC bus or an AC bus to a DC power source that is chargeable and configured to receive power. The power conversion may be from a DC bus to an AC bus, from an AC bus to a DC bus, from a first DC bus to a second DC bus, from a first AC bus to a second AC bus, etc. One or more of the buses may be designated as a line for backup loads.

The power conversion may be done using one or more power conversion devices 100 that include power converter circuitry 2004 and switching circuitry 104. The power converter circuitry 2004 may include DC to DC power conversion circuitry, AC to AC power conversion circuitry, DC to AC power conversion circuitry, AC to DC power conversion circuitry, etc. The switching circuitry 104 may be configured to connect between the power converter circuitry 2004 and a plurality of power bus lines. The switching circuitry 104 may be configured to switchably connect between the power converter circuitry 2004 and the plurality of power bus lines. The switching circuitry 104 may include a plurality of switches each with terminals that connect between a terminal of the power conversion circuitry 2004 and a terminal of a power bus line. For example, switching circuitry 104 may have one or more switches that connect between the power converter circuitry 2004 and one or more DC bus lines, one or more switches that connect between the power converter circuitry 2004 and one or more AC bus lines, etc. In some examples, the switching circuitry 104 may switchably connect the power converter circuitry 2004 to a plurality of DC bus lines. In some examples, the switching circuitry 1302 may switchably connect the power converter circuitry 2004 to a plurality of AC bus lines. In some examples, the switching circuitry 104 may switchably connect the power converter circuitry 2004 to one or more DC bus lines and one or more AC bus lines. In some examples, the power converter circuitry 2004 may be connected to a power source 1006. The power source 1006 may be a rechargeable power source, such as a battery. The power source 1006 may be internal or external to a housing for the converter circuitry 2004 and/or the switching circuitry 104.

Reference is now made to Fig. 20B, which shows a power device 2000δ.

Power device 2000δ may be similar to other power devices 2000 shown and described herein.

Power device 2000δ may include battery optimization circuitry (BOC) 2006δ. Battery optimization circuitry 2006δ may be connected to power source 1006δ and conversion circuitry 2004δ. Battery optimization circuitry 2006δ may be configured to control the operational mode of one or more battery power sources (e.g., controlling the charging and/or discharging of one or more battery power sources). Battery optimization circuitry 2006δ may include one or more sensors, one or more switches, one or more converter circuitries, etc. The conversion circuitry 2004 δ may be similar to other conversion circuitries 2004. For example, the conversion circuitry 2004δ may include first converter circuitry 102, second converter circuitry 1008, third converter circuitry 1010, and/or fourth conversion circuitry 1100, which are shown and described herein.

Reference is now made to Figs. 21A and 21B, which show switching arrangements 2008A, 2008B.

Switching arrangements 2008A, 2008B may be similar to other switching arrangements 2008 shown and described herein. Fig. 21A shows switching arrangement 2008 forming a connection to the power bus (e.g., such as shown in Figs. 19A and 19B). Switching arrangement 2008 may include a switch SAA. Switch SAA may be similar to other switches S shown and described herein. Switch SAA may be connected between power converter circuitry 102 and a power bus.

As shown in Fig. 21B, switching arrangement 2008B may include a plurality of switches G1, G2. Each switch G may be similar to other switches S shown and described herein. Switching arrangement 2008B may include a plurality of switches connected to each other in parallel. Switching arrangement 2008B may include a first electromechanical and/or electromagnetic switch and a second non-electromechanical and non-electromagnetic switch. Switching arrangement 2008B may include a relay and a transistor. For example, switch G2 may be bidirectional. For example, switch G2 may be a thyristor. For example, switch G2 may be a triode for alternating current (TRIAC). For example, second switch G2 may be used to make a relatively quick connection between switching circuitry 104 and a power bus. First switch G1 may be used to make a relatively longer lasting connection between switching circuitry 104 and a power bus. For example, second switch G2 may be used to make a relatively quick initial connection, and then first switch G1 may be connected in parallel, and then second switch G2 may be disconnected and first switch G2 may remain connected for a relatively longer time. Second switch G2 may also be used to help disconnect the first switch G1 in a similar fashion. For example, second switch G2 may be connected in parallel to first switch G1, and then first switch G1 may be disconnected, and then second switch G2 may be disconnected.

For example, switching arrangement 1308B may be a hybrid switch implementation with the second switch G2 (e.g., a TRIAC) used for relatively fast switching (e.g., depending on a load or source, for example, for uninterruptible power supplies [UPS], backup appliances, etc.). The second switch G2 may also be used to help with zero voltage switching (ZVS) of the first switch G1 (e.g., a single pole single throw [SPST] relay). For example, the second switch G2 (e.g., a TRIAC) may be configured to remain in an "ON" state, as long as it conducts current that is above a current threshold (e.g., in a range of about 1 mA to about 10 mA) even if a gating signal is no longer provided to the second switch G2.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. An apparatus comprising:
first converter circuitry comprising cycloconverter circuitry configured to convert an alternating current (AC) input to an AC output, the cycloconverter circuitry comprising a plurality of switches;
power source circuitry connected to the first converter circuitry, the power source circuitry comprising: a direct current (DC) power source;
second converter circuitry comprising inverter circuitry configured to convert a DC input from the DC power source to an AC output, the AC output of the second converter circuitry being supplied to the first converter circuitry as the AC input;
third converter circuitry comprising transformer circuitry comprising a first inductor with a first terminal connected to the first converter circuitry and a second inductor with a second terminal connected to the second converter circuitry; and
control circuitry configured to control the plurality of switches of the cycloconverter circuitry to adjust a duty cycle.

Clause 2. The apparatus of clause 1, wherein the control circuitry is configured to control the plurality of switches of the cycloconverter circuitry to operate at a 50% duty cycle.

Clause 3. The apparatus of clause 1, wherein the control circuitry is configured to activate a first half of the plurality of switches for a first period of time and activate a second half of the plurality of switches for a second period of time, or deactivate a first half of the plurality of switches for a first period of time and deactivate a second half of the plurality of switches for a second period of time.

Clause 4. The apparatus of clause 1, wherein the control circuitry is configured to:
operate a first half of the plurality of switches in a switching mode of operation for a first period of time, and operate the first half of the plurality of switches in a short circuit mode of operation for a second period of time, and operate a second half of the plurality of switches in a short circuit mode of operation for the first period of time, and operate the second half of the plurality of switches in a switching mode of operation for the second period of time.

Clause 5. The apparatus of any of clauses 1-4, wherein the second converter circuitry is bidirectional converter circuitry configured to convert an AC input to a DC output, and the DC power source is a rechargeable DC power source.

Clause 6. The apparatus of any of clauses 1-5, wherein the first converter circuitry comprises a connection terminal and is configured to produce a single-phase AC output using the connection terminal.

Clause 7. The apparatus of any of clauses 1-5, wherein the first converter circuitry comprises three connection terminals and is configured to produce three-phase AC output using the three connection terminals.

Clause 8. The apparatus of any of clauses 1-5, wherein the first converter circuitry comprises a connection terminal and is configured to produce a DC output using the connection terminal.

Clause 9. The apparatus of any of clauses 1-8, wherein the first converter circuitry is configured to connect to switching circuitry and the switching circuitry is configured to connect to a power bus.

Clause 10. The apparatus of any of clauses 1-9, wherein the plurality of switches comprises a pair of switches connected to each other in series.

Clause 11. An apparatus comprising:
first converter circuitry comprising cycloconverter circuitry configured to convert an alternating current (AC) input to an AC output, the cycloconverter circuitry comprising a plurality of switches;
power source circuitry connected to the first converter circuitry, the power source circuitry comprising: a direct current (DC) power source;
second converter circuitry comprising inverter circuitry configured to convert a DC input to an AC output, the AC output of the second converter circuitry being supplied to the first converter circuitry as the AC input;
third converter circuitry comprising transformer circuitry comprising a first inductor with a first terminal connected to the first converter circuitry and a second inductor with a second terminal connected to the second converter circuitry; and
fourth converter circuitry comprising boost converter circuitry connected to the DC power source and the second converter circuitry, the fourth converter circuitry configured to convert a DC input from the DC power source to a DC output, the DC output being supplied to the second converter circuitry as the DC input convertible to the AC output by the second converter circuitry.

Clause 12. The apparatus of clause 11, wherein the fourth converter circuitry comprises a split inductor with a plurality of different windings.

Clause 13. The apparatus of clause 11, wherein the fourth converter circuitry comprises a plurality of inductors.

Clause 14. The apparatus of any of clauses 11-13, wherein the fourth converter circuitry comprises:
a first inductor terminal connected to a first transformer terminal of the third converter circuitry, and a second inductor terminal connected to a second transformer terminal of the third converter circuitry.

Clause 15. The apparatus of any of clauses 11-14, wherein the fourth converter circuitry comprises: a first inductor terminal connected to a first terminal of the second converter circuitry, and a second inductor terminal connected to a second terminal of the second converter circuitry.

Clause 16. The apparatus of any of clauses 11-15, wherein the fourth converter circuitry comprises a capacitor with a terminal connected to the second converter circuitry.

Clause 17. The apparatus of any of clauses 11-16, wherein the fourth converter circuitry is bidirectional converter circuitry, and the DC power source is a rechargeable DC power source.

Clause 18. The apparatus of any of clauses 11-16, wherein the fourth converter circuitry is bidirectional converter circuitry configured to step down a DC voltage to the DC power source, and the DC power source is a rechargeable DC power source.

Clause 19. The apparatus of any of clauses 11-18, wherein the plurality of switches comprises a pair of switches connected to each other in series.

Clause 20. An apparatus comprising:
first converter circuitry comprising cycloconverter circuitry configured to convert an alternating current (AC) input to an AC output, the cycloconverter circuitry comprising a plurality of switches;
power source circuitry connected to the first converter circuitry, the power source circuitry comprising: a direct current (DC) power source;
second converter circuitry comprising inverter circuitry configured to convert a DC input from the DC power source to an AC output, the AC output of the second converter circuitry being supplied to the first converter circuitry as the AC input;
third converter circuitry comprising transformer circuitry comprising a first inductor with a first terminal connected to the first converter circuitry and a second inductor with a second terminal connected to the second converter circuitry,
wherein the third converter circuitry comprises a splitting connection of the second inductor.

Clause 21. The apparatus of clause 20, wherein the splitting connection is at a midpoint of the second inductor.

Clause 22. The apparatus of any of clauses 20-21, wherein the splitting connection is connected to a ground potential.

Clause 23. The apparatus of any of clauses 20-21, wherein the splitting connection is directly connected between a midpoint of the second inductor and a ground potential.

Clause 24. The apparatus of any of clauses 22-23, wherein the ground potential is a virtual ground potential.

Clause 25. The apparatus of any of clauses 20-24, wherein the plurality of switches comprises a pair of switches connected to each other in series.

Clause 26. The apparatus of any of clauses 20-25, further comprising fourth converter circuitry comprising boost converter circuitry connected to the DC power source and the second converter circuitry, the fourth converter circuitry configured to convert a DC input to a DC output.

Clause 27. An apparatus comprising:
first converter circuitry comprising cycloconverter circuitry configured to convert an alternating current (AC) input to an AC output, the cycloconverter circuitry comprising a plurality of switches;
power source circuitry connected to the first converter circuitry, the power source circuitry comprising: a direct current (DC) power source;
second converter circuitry comprising inverter circuitry configured to convert a DC input from the DC power source to an AC output, the AC output of the second converter circuitry being supplied to the first converter circuitry as the AC input;
third converter circuitry comprising transformer circuitry comprising a first inductor with a first terminal connected to the first converter circuitry and a second inductor with a second terminal connected to the second converter circuitry, wherein the third converter circuitry comprises a splitting connection of the first inductor.

Clause 28. The apparatus of clause 27, wherein the splitting connection is at a midpoint of the first inductor.

Clause 29. The apparatus of any of clauses 27-28, wherein the splitting connection is connected to a ground potential.

Clause 30. The apparatus of any of clauses 27-28, wherein the splitting connection is directly connected between a midpoint of the first inductor and a ground potential.

Clause 31. The apparatus of any of clauses 29-30, wherein the ground potential is a virtual ground potential.

Clause 32. The apparatus of any of clauses 27-31, wherein the plurality of switches comprises a pair of switches connected to each other in series.

Clause 33. The apparatus of any of clauses 27-32, further comprising fourth converter circuitry comprising boost converter circuitry connected to the DC power source and the second converter circuitry, the fourth converter circuitry configured to convert a DC input to a DC output.

Clause 34. An apparatus comprising:
first converter circuitry comprising cycloconverter circuitry configured to convert an alternating current (AC) input to an AC output, the cycloconverter circuitry comprising a plurality of switches;
power source circuitry connected to the first converter circuitry, the power source circuitry comprising: a direct current (DC) power source;
second converter circuitry comprising inverter circuitry configured to convert a DC input from the DC power source to an AC output, the AC output of the second converter circuitry being supplied to the first converter circuitry as the AC input;
third converter circuitry comprising transformer circuitry comprising a first inductor with a first terminal connected to the first converter circuitry and a second inductor with a second terminal connected to the second converter circuitry, wherein the third converter circuitry comprises feedback circuitry.

Clause 35. The apparatus of clause 34, wherein the feedback circuitry comprises a sensor for measuring an electrical parameter.

Clause 36. The apparatus of clause 35, wherein the electrical parameter is a current.

Clause 37. The apparatus of clause 35, wherein the electrical parameter is related to the third converter circuitry.

Clause 38. The apparatus of any of clause 35, wherein the electrical parameter is related to transformer circuitry of the third converter circuitry.

Clause 39. The apparatus of any of clause 35, wherein the electrical parameter is a current related to transformer circuitry of the third converter circuitry.

Clause 40. The apparatus of any of clauses 34-39, wherein the feedback circuitry comprises feedback control circuitry.

Clause 41. The apparatus of clause 40, wherein the feedback control circuitry comprises Proportional Integral (PI) control circuitry.

Clause 42. The apparatus of clause 40, wherein the feedback control circuitry comprises Proportional Integral Derivative (PID) control circuitry.

Clause 43. The apparatus of any of clauses 34-39, wherein the feedback circuitry comprises switching circuitry.

Clause 44. The apparatus of any of clauses 34-39, wherein the feedback circuitry comprises Pulse Width Modulation (PWM) circuitry.

Clause 45. The apparatus of any of clauses 34-39, wherein the plurality of switches comprises a pair of switches connected to each other in series.

Clause 46. The apparatus of any of clauses 34-45, further comprising fourth converter circuitry comprising boost converter circuitry connected to the DC power source and the second converter circuitry, the fourth converter circuitry configured to convert a DC input to a DC output.

Clause 47. An apparatus comprising:
first converter circuitry comprising a plurality of cycloconverter circuitries, each cycloconverter circuitry of the plurality of cycloconverter circuities comprising a plurality of switches and being configured to convert an alternating current (AC) input to an AC output;
power source circuitry connected to the first converter circuitry, the power source circuitry comprising: a direct current (DC) power source;
second converter circuitry comprising inverter circuitry configured to convert a DC input from the DC power source to an AC output, the AC output of the second converter circuitry being supplied to the first converter circuitry as the AC input; and
third converter circuitry comprising transformer circuitry comprising a plurality of terminals connected to the first converter circuitry.

Clause 48. The apparatus of clause 47, wherein:
the plurality of terminals comprises a first terminal and a second terminal, the plurality of cycloconverter circuitries comprises a first cycloconverter circuitry and a second cycloconverter circuitry, and the first terminal is connected to the first cycloconverter circuitry and the second terminal is connected to the second cycloconverter circuitry.

Clause 49. The apparatus of clause 48, wherein the first terminal and the second terminal are on a same side of the transformer circuitry of the third converter circuitry.

Clause 50. The apparatus of clause 49, wherein the same side is a primary side or a secondary side.

Clause 51. The apparatus of clause 48, wherein the first terminal is on a first side of the transformer circuitry of the third converter circuitry, and the second terminal is on a second side of the transformer circuitry of the third converter circuitry.

Clause 52. The apparatus of clause 51, wherein the first side is a primary side and the second side is a secondary side.

Clause 53. The apparatus of any of clauses 47-52, wherein the first converter circuitry is configured to connect to switching circuitry and the switching circuitry is configured to connect to a power bus.

Clause 54. The apparatus of clause 53, wherein:
the plurality of cycloconverter circuitries comprises a first cycloconverter circuitry and a second cycloconverter circuitry, the first cycloconverter circuitry comprises a first output terminal connected to the switching circuitry, and the second cycloconverter circuitry comprises a second output terminal connected to the switching circuitry.

Clause 55. The apparatus of any of clauses 47-54, further comprising a plurality of clamping circuitries, wherein:
the plurality of clamping circuitries comprises a first clamping circuitry and a second clamping circuitry, the plurality of cycloconverter circuitries comprises a first cycloconverter circuitry and a second cycloconverter circuitry, and the first clamping circuitry is connected to the first cycloconverter circuitry and the second clamping circuitry is connected to the second cycloconverter circuitry.

Clause 56. The apparatus of any of clauses 47-54, wherein:
the plurality of terminals comprises six pairs of terminals, the plurality of cycloconverter circuitries comprises six cycloconverter circuitries, and each pair of terminals of the plurality of terminals is connected to a different cycloconverter circuitry of the plurality of cycloconverter circuitries.

Clause 57. The apparatus of clause 56, further comprising a plurality of clamping circuitries, wherein:
the plurality of clamping circuitries comprise six clamping circuitries, and each clamping circuitry of the plurality of clamping circuitries is connected to a different cycloconverter circuitry of the plurality of cycloconverter circuitries.

Clause 58. The apparatus of any of clauses 47-57, wherein the plurality of cycloconverter circuitries are each configured to produce a single-phase AC output using a connection terminal.

Clause 59. The apparatus of any of clauses 47-57, wherein the plurality of cycloconverter circuitries are each configured to produce three-phase AC output using three connection terminals.

Clause 60. The apparatus of any of clauses 47-57, wherein the plurality of cycloconverter circuitries are each configured to produce a DC output using a connection terminal.

Clause 61. The apparatus of any of clauses 47-53, wherein:
the plurality of cycloconverter circuitries comprises a first cycloconverter circuitry and a second cycloconverter circuitry, the first cycloconverter circuitry is configured to produce a single phase AC output using a first connection terminal, and the configured to produce a DC output using a second connection terminal.

Clause 62. The apparatus of any of clauses 47-53, wherein:
the plurality of cycloconverter circuitries comprises a first cycloconverter circuitry and a second cycloconverter circuitry, the first cycloconverter circuitry is configured to produce a three phase AC output using a plurality of connection terminals, and the configured to produce a DC output using an additional connection terminal.

Clause 63. The apparatus of any of clauses 47-62, wherein the plurality of switches comprises a pair of switches connected to each other in series.

Clause 64. The apparatus of any of clauses 47-63, further comprising fourth converter circuitry comprising boost converter circuitry connected to the DC power source and the second converter circuitry, the fourth converter circuitry configured to convert a DC input to a DC output.

Clause 65. The apparatus of any of clauses 47-64, wherein the plurality of cycloconverter circuitries each comprise T-type neutral point clamped (TNPC) inverter circuitry.

Clause 66. The apparatus of clause 65, wherein the TNPC inverter circuitry comprises a pair of switches connected to each other in series.

Clause 67. An apparatus comprising:
first converter circuitry comprising cycloconverter circuitry configured to convert an alternating current (AC) input to an AC output, the cycloconverter circuitry comprising a plurality of switches and T-type neutral point clamped (TNPC) inverter circuitry;
power source circuitry connected to the first converter circuitry, the power source circuitry comprising: a direct current (DC) power source;
second converter circuitry comprising inverter circuitry configured to convert a DC input from the DC power source to an AC output, the AC output of the second converter circuitry being supplied to the first converter circuitry as the AC input;
third converter circuitry comprising transformer circuitry comprising a first inductor with a first terminal connected to the first converter circuitry and a second inductor with a second terminal connected to the second converter circuitry, wherein the third converter circuitry comprises feedback circuitry.

Clause 68. The apparatus of clause 67, wherein the TNPC inverter circuitry comprises a pair of switches connected to each other in series.

Clause 69. An apparatus comprising:
first converter circuitry comprising cycloconverter circuitry configured to convert an alternating current (AC) input to an AC output, the cycloconverter circuitry comprising a plurality of switches;
a plurality of power source circuitries connected to the first converter circuitry, each power source circuitry of the plurality of power source circuitries comprising: a direct current (DC) power source; and
second converter circuitry comprising inverter circuitry configured to convert a DC input from the DC power source to an AC output, the AC output of the second converter circuitry being supplied to the first converter circuitry as the AC input; and
third converter circuitry comprising transformer circuitry comprising a plurality of terminals connected to the plurality of power source circuitries.

Clause 70. The apparatus of clause 69, wherein each power source circuitry comprises fourth converter circuitry comprising boost converter circuitry connected to the DC power source and the second converter circuitry, the respective fourth converter circuitries configured to convert a DC input to a DC output.

Clause 71. An apparatus comprising:
power conversion circuitry comprising a plurality of connection terminals; and
switching circuitry configured to connect between the plurality of connection terminals and a plurality of power buses.

Clause 72. The apparatus of clause 71, wherein the power conversion circuitry is configured to produce alternating current (AC) power or direct current (DC) power.

Clause 73. The apparatus of any of clauses 71-72, wherein the power buses comprise: an alternating current (AC) power bus and/or a direct current (DC) power bus.

Clause 74. The apparatus of any of clauses 71-72, wherein the power buses comprise an alternating current (AC) power bus and a direct current (DC) power bus.

Clause 75. The apparatus of any of clauses 71-74, wherein the switching circuitry comprises a plurality of switching arrangements and each switching arrangement of the plurality of switching arrangements is connected to a connection terminal.

Clause 76. The apparatus of clause 75, wherein each of the switching arrangements of the plurality of switching arrangements comprises a plurality of switches.

Clause 77. The apparatus of clause 75, wherein each of the switching arrangements of the plurality of switching arrangements comprises a pair of switches connected to each other in parallel.

Clause 78. The apparatus of clause 77, wherein the respective pairs of switches comprise an electromechanical switch and non-electromechanical switch.

Clause 79. The apparatus of clause 77, wherein the respective pairs of switches comprise an electromagnetic switch and non-electromagnetic switch.

Clause 80. The apparatus of clause 77, wherein the respective pairs of switches comprise a relay and a transistor.

Clause 81. A system comprising:
a plurality of power bus lines comprising: a first direct current (DC) bus line, a second DC bus line, a first alternating current (AC) bus line, and a second AC bus line;
first converter circuitry comprising: DC to DC conversion circuitry, DC to AC conversion circuitry, and AC to DC conversion circuitry;
first switching circuitry comprising a first plurality of switches, wherein the first plurality of switches comprise: a first switch connected between the first converter circuitry and the first DC bus line, a second switch connected between the first converter circuitry and the second DC bus line, a third switch connected between the first converter circuitry and the first AC bus line, and a fourth switch connected between the first converter circuitry and the second AC bus line;
first power circuitry connected to the first converter circuitry, wherein the first power circuitry is configured to provide or receive electrical power; and
control circuitry configured to control a first flow of power between the first power circuitry and the plurality of power bus lines by controlling the first plurality of switches to connect and disconnect the first power circuitry to and from the plurality of power bus lines.

Clause 82. The system of clause 81, further comprising:
second converter circuitry comprising: second DC to DC conversion circuitry, second DC to AC conversion circuitry, and second AC to DC conversion circuitry;
second switching circuitry comprising a second plurality of switches, wherein the second plurality of switches comprise: a fifth switch connected between the second converter circuitry and the first DC bus line, a sixth switch connected between the second converter circuitry and the second DC bus line, a seventh switch connected between the second converter circuitry and the first AC bus line, and an eighth switch connected between the second converter circuitry and the second AC bus line;
second power circuitry connected to the second converter circuitry, wherein the second power circuitry is configured to provide or receive electrical power; and
wherein the control circuitry is configured to control a second flow of power between the second power circuitry and the plurality of power bus lines by controlling the second plurality of switches to connect and disconnect the second power circuitry to and from the plurality of power bus lines.

Clause 83. The system of clause 81, wherein the first converter circuitry comprises a power transformer.

Clause 84. The system of clause 83, wherein the power transformer comprises a plurality of inductors comprising: a first inductor, a second inductor, and a third inductor.

Clause 85. The system of clause 84, wherein the first inductor is connected between a first pair of terminals; wherein the second inductor is connected between a second pair of terminals; and wherein the third inductor is connected between a third pair of terminals.

Clause 86. The system of clause 85, wherein the first power circuitry is connected across the first pair of terminals.

Clause 87. The system of clause 85, wherein the first switch is connected to a terminal of the second pair of terminals; wherein the second switch is connected to another terminal of the second pair of terminals; wherein the third switch is connected to a terminal of the third pair of terminals; and wherein the fourth switch is connected to another terminal of the third pair of terminals.

Clause 88. The system of any one of clauses 81-87, wherein a DC load is connected to the first DC bus line.

Clause 89. The system of any one of clauses 81-88, wherein a DC power source is connected to the first DC bus line.

Clause 90. The system of clause 89, wherein the DC power source is a photovoltaic power source.

Clause 91. The system of any one of clause 81-90, wherein an AC load is connected to the first AC bus line.

Clause 92. The system of any one of clauses 81-91, wherein an AC power source is connected to the first AC bus line.

Clause 93. The system of clause 92, wherein the AC power source is a utility grid.

Clause 94. The system of clause 92, wherein the AC power source is a wind powered source.

Clause 95. The system of clause 81, wherein the first power circuitry comprises charge storage circuitry.

Clause 96. The system of clause 81, further comprising communication circuitry, memory circuitry, and auxiliary power circuitry.

Clause 97. The system of clause 88, wherein a second DC load is connected to the second DC bus line.

Clause 98. The system of clause 97, wherein a DC power source is connected to the second DC bus line; and wherein the second DC load is a backed-up DC load.

Clause 99. The system of clause 97, wherein an AC power source is connected to the first AC bus line; and wherein the second DC load is a backed-up DC load.

Clause 100. The system of clause 81, wherein a DC load and a DC power source are connected to the first DC bus line.

Clause 101. The system of clause 91, wherein a second AC load is connected to the second AC bus line.

Clause 102. The system of clause 101, wherein an AC power source is connected to the second AC bus line; and wherein the second AC load is a backed-up AC load.

Clause 103. The system of clause 101, wherein a DC power source is connected to the first DC bus line; and wherein the second AC load is a backed-up AC load.

Clause 104. The system of clause 81, wherein an AC load and a AC power source are connected to the first AC bus line.

Clause 105. An apparatus comprising:
converter circuitry comprising: DC to DC conversion circuitry, DC to AC conversion circuitry, and AC to DC conversion circuitry;
switching circuitry comprising a plurality of switches, the plurality of switches comprising: a first switch configured to be connected between the converter circuitry and a first DC bus line of a plurality of power bus lines, a second switch configured to be connected between the converter circuitry and a second DC bus line of the plurality of power bus lines, a third switch configured to be connected between the converter circuitry and a first AC bus line of the plurality of power bus lines, and a fourth switch configured to be connected between the converter circuitry and a second AC bus line of the plurality of power bus lines;
power circuitry connected to the converter circuitry, wherein the power circuitry is configured to provide or receive electrical power; and
control circuitry configured to control a first flow of power between the power circuitry and the plurality of power bus lines by controlling the plurality of switches to connect and disconnect the power circuitry to and from the plurality of power bus lines.

Clause 106. The apparatus of clause 105, further comprising:
second converter circuitry comprising: second DC to DC conversion circuitry, second DC to AC conversion circuitry, and second AC to DC conversion circuitry;
second switching circuitry comprising a second plurality of switches, the second plurality of switches comprising: a fifth switch configured to be connected between the second converter circuitry and the first DC bus line, a sixth switch configured to be connected between the second converter circuitry and the second DC bus line, a seventh switch configured to be connected between the second converter circuitry and the first AC bus line, and an eighth switch configured to be connected between the second converter circuitry and the second AC bus line;
second power circuitry connected to the second converter circuitry, wherein the second power circuitry is configured to provide or receive electrical power; and
wherein the control circuitry is configured to control a second flow of power between the second power circuitry and the plurality of power bus lines by controlling the second plurality of switches to connect and disconnect the second power circuitry to and from the plurality of power bus lines.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

## Claims

1. A system comprising:
a plurality of power bus lines comprising:
a first direct current (DC) bus line,
a second DC bus line,
a first alternating current (AC) bus line, and
a second AC bus line;
first converter circuitry comprising:
DC to DC conversion circuitry,
DC to AC conversion circuitry, and
AC to DC conversion circuitry;
first switching circuitry comprising a first plurality of switches, wherein the first plurality of switches comprise:
a first switch connected between the first converter circuitry and the first DC bus line,
a second switch connected between the first converter circuitry and the second DC bus line,
a third switch connected between the first converter circuitry and the first AC bus line, and
a fourth switch connected between the first converter circuitry and the second AC bus line;
first power circuitry connected to the first converter circuitry, wherein the first power circuitry is configured to provide or receive electrical power; and
control circuitry configured to control a first flow of power between the first power circuitry and the plurality of power bus lines by controlling the first plurality of switches to connect and disconnect the first power circuitry to and from the plurality of power bus lines.

2. The system of claim 1, further comprising:
second converter circuitry comprising:
second DC to DC conversion circuitry,
second DC to AC conversion circuitry, and
second AC to DC conversion circuitry;
second switching circuitry comprising a second plurality of switches, wherein the second plurality of switches comprise:
a fifth switch connected between the second converter circuitry and the first DC bus line,
a sixth switch connected between the second converter circuitry and the second DC bus line,
a seventh switch connected between the second converter circuitry and the first AC bus line, and
an eighth switch connected between the second converter circuitry and the second AC bus line;
second power circuitry connected to the second converter circuitry, wherein the second power circuitry is configured to provide or receive electrical power; and
wherein the control circuitry is configured to control a second flow of power between the second power circuitry and the plurality of power bus lines by controlling the second plurality of switches to connect and disconnect the second power circuitry to and from the plurality of power bus lines.

3. The system of claim 1, wherein the first converter circuitry comprises a power transformer.

4. The system of claim 3, wherein the power transformer comprises a plurality of inductors comprising: a first inductor, a second inductor, and a third inductor.

5. The system of claim 4, wherein the first inductor is connected between a first pair of terminals; wherein the second inductor is connected between a second pair of terminals; and wherein the third inductor is connected between a third pair of terminals.

6. The system of claim 5, wherein the first power circuitry is connected across the first pair of terminals.

7. The system of claim 5, wherein the first switch is connected to a terminal of the second pair of terminals; wherein the second switch is connected to another terminal of the second pair of terminals; wherein the third switch is connected to a terminal of the third pair of terminals; and wherein the fourth switch is connected to another terminal of the third pair of terminals.

8. The system of any one of the preceding claims, wherein a DC load is connected to the first DC bus line.

9. The system of any one of the preceding claims, wherein a DC power source is connected to the first DC bus line.

10. The system of claim 9, wherein the DC power source is a photovoltaic power source.

11. The system of any one of the preceding claims, wherein an AC load is connected to the first AC bus line.

12. The system of any one of the preceding claims, wherein an AC power source is connected to the first AC bus line.

13. The system of claim 12, wherein the AC power source is a utility grid or a wind powered source.

14. An apparatus comprising:
converter circuitry comprising:
DC to DC conversion circuitry,
DC to AC conversion circuitry, and
AC to DC conversion circuitry;
switching circuitry comprising a plurality of switches, the plurality of switches comprising:
a first switch configured to be connected between the converter circuitry and a first DC bus line of a plurality of power bus lines,
a second switch configured to be connected between the converter circuitry and a second DC bus line of the plurality of power bus lines,
a third switch configured to be connected between the converter circuitry and a first AC bus line of the plurality of power bus lines, and
a fourth switch configured to be connected between the converter circuitry and a second AC bus line of the plurality of power bus lines;
power circuitry connected to the converter circuitry, wherein the power circuitry is configured to provide or receive electrical power; and
control circuitry configured to control a first flow of power between the power circuitry and the plurality of power bus lines by controlling the plurality of switches to connect and disconnect the power circuitry to and from the plurality of power bus lines.

15. The apparatus of claim 14, further comprising:
second converter circuitry comprising:
second DC to DC conversion circuitry,
second DC to AC conversion circuitry, and
second AC to DC conversion circuitry;
second switching circuitry comprising a second plurality of switches, the second plurality of switches comprising:
a fifth switch configured to be connected between the second converter circuitry and the first DC bus line,
a sixth switch configured to be connected between the second converter circuitry and the second DC bus line,
a seventh switch configured to be connected between the second converter circuitry and the first AC bus line, and
an eighth switch configured to be connected between the second converter circuitry and the second AC bus line;
second power circuitry connected to the second converter circuitry, wherein the second power circuitry is configured to provide or receive electrical power; and
wherein the control circuitry is configured to control a second flow of power between the second power circuitry and the plurality of power bus lines by controlling the second plurality of switches to connect and disconnect the second power circuitry to and from the plurality of power bus lines.
